(19) Europäisches Patentamt
European Patent Office
Office européen des brevets

(11) **EP 2 905 727 A1**

(12) **EUROPEAN PATENT APPLICATION**
published in accordance with Art. 153(4) EPC

(43) Date of publication:
**12.08.2015 Bulletin 2015/33**

(21) Application number: **13843900.5**

(22) Date of filing: **01.10.2013**

(51) Int Cl.:
*G06K 19/06* (2006.01)    *G06K 1/12* (2006.01)
*G06K 7/10* (2006.01)

(86) International application number:
**PCT/JP2013/076722**

(87) International publication number:
**WO 2014/054647 (10.04.2014 Gazette 2014/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **01.10.2012 JP 2012219902**
**06.11.2012 JP 2012244923**

(71) Applicant: **I.P. Solutions, Ltd.**
**Chiyoda-ku,**
**Tokyo**
**101-0041 (JP)**

(72) Inventor: **YOSHIDA, Kenji**
**Bunkyo-ku**
**Tokyo 112-0002 (JP)**

(74) Representative: **Klunker . Schmitt-Nilson . Hirsch**
**Patentanwälte**
**Destouchesstraße 68**
**80796 München (DE)**

(54) **DOT PATTERN, DOT-PATTERN-FORMING MEDIUM, PROGRAM FOR GENERATING IMAGE DATA FOR DOT PATTERN, DOT PATTERN FORMING APPARATUS, OPTICAL DEVICE, OPTICAL DEVICE READER, INFORMATION I/O DEVICE, DOT PATTERN READER**

(57) To provide a new dot pattern where a technology thereof is the technology to realize definition of information based on not an arrangement position of a dot, but a distance and direction between two dots, and as compared with the dot pattern of the above-mentioned previously existing technology, (1) reading is possible even when print resolution and read resolution are low, (2) a large information amount can be defined by the small number of dots, (3) decoding can be carried out at high speed, (4) reading can be carried out easily even when arrangement of an imaged dot pattern is deformed largely, and (5) decoding visually is difficult.

There is provided a dot pattern where at least one set of a starting-point information dot that is an information dot to be a starting point, and an end-point information dot that is an information dot to be an end point are provided, and the two or more information dots are arranged while an interval between information dots which adjoin each other in a prescribed order from the starting-point information dot has a prescribed distance value or prescribed distance value of a prescribed direction interval, and codes are encoded based on the prescribed distance value or prescribed distance value of a prescribed direction interval.

[FIG. 78]

## Description

Technical Field

The present invention relates to encoding of codes (numerical value and/or information) based on a dot pattern constituted by two or more dots.

Background Art

A technology to express codes (numerical value and/or information) based on an arrangement (dot pattern) of two or more fine dots printed on a paper surface (or displayed by a display device) has prevailed widely.

Nowadays, as a dot pattern which circulates in a market, Grid Onput (Registered trademark) which is a standard of Gridmark Inc. in Japan, and is represented by Japanese patent No. 3706385 (Patent document 1) and Japanese patent No. 3771252 (Patent document 2) is well-known in particular.

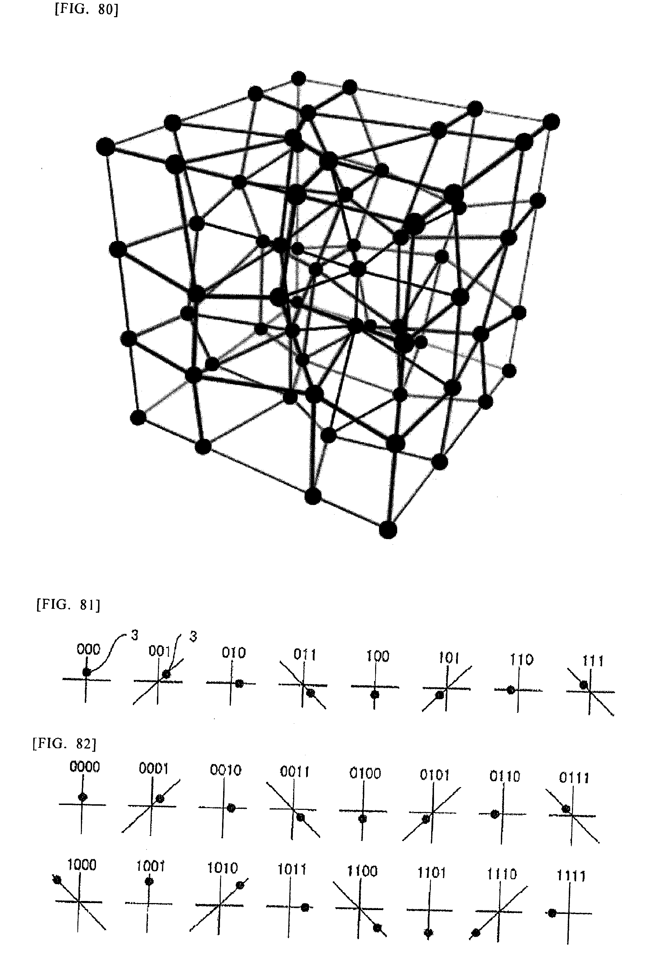

FIG. 81 illustrates expression of codes based on a direction in which an information dot is shifted from a reference point configured virtually, which is a previously existing technology. According to FIG. 81, since an information dot is arranged while shifted in eight kinds of directions from the reference point, codes of the number where the number of eight kinds per information dot is multiplied by the number of information dots can be expressed.

FIG. 82 illustrates expression of codes based on a direction and distance in which an information dot is shifted from a reference point configured virtually, which is a previously existing technology. According to FIG. 82, a dot is arranged while shifted in eight kinds of direction from a reference point and at two kinds of distances which are a distance near to the reference point and a distance far from the reference point, codes of the number where the number of sixteen kinds per information dot is multiplied by the number of information dots can be expressed.

Citation List

Patent Literature

PTL 1: Japanese Patent No. 3706385
PTL 2: Japanese Patent No. 3771252

Summary of Invention

Technical Problem

An object of the present invention is to provide a new dot pattern where a technology thereof is a technology to realize definition of information based on not an arrangement position of a dot, but a distance and direction between two dots, and as compared with the dot pattern of the above-mentioned previously existing technology, (1) reading is possible even when print resolution and read resolution are low,(2) a large information amount can be defined by the small number of dots,(3) decoding can be carried out at high speed,(4) reading can be carried out easily even when an arrangement of an imaged dot pattern is deformed largely, and (5) decoding visually is difficult.

Solution to Problems

A dot pattern for solving this subject is a dot pattern provided with two or more information dots, and the dot pattern is provided with at least one set of a starting-point information dot that is an information dot to be a starting point, and an end-point information dot that is an information dot to be an end point, and the two or more information dots are arranged while an interval between information dots which adjoin each other in a prescribed order from the starting-point information dot has a prescribed distance value or prescribed distance value of a prescribed direction interval, and codes are encoded based on the prescribed distance value or prescribed distance value of a prescribed direction interval.

Brief Description of Drawings

Figure 1 illustrates a first embodiment of the present invention;
Figure 2 illustrates the first embodiment of the present invention;
Figure 3 illustrates the first embodiment of the present invention;
Figure 4 illustrates the first embodiment of the present invention;
Figure 5 illustrates the first embodiment of the present invention;
Figure 6 illustrates the first embodiment of the present invention;
Figure 7 illustrates the first embodiment of the present invention;
Figure 8 illustrates the first embodiment of the present invention;
Figure 9 illustrates the first embodiment of the present invention;
Figure 10 illustrates the first embodiment of the present invention;
Figure 11 illustrates the first embodiment of the present invention;
Figure 12 illustrates the first embodiment of the present invention;
Figure 13 illustrates the first embodiment of the present invention;
Figure 14 illustrates the first embodiment of the present invention;

Figure 15 illustrates the first embodiment of the present invention;
Figure 16 illustrates the first embodiment of the present invention;
Figure 17 illustrates the first embodiment of the present invention;
Figure 18 illustrates the first embodiment of the present invention;
Figure 19 illustrates the first embodiment of the present invention;
Figure 20 illustrates the first embodiment of the present invention;
Figure 21 illustrates the first embodiment of the present invention;
Figure 22 illustrates the first embodiment of the present invention;
Figure 23 illustrates the first embodiment of the present invention;
Figure 24 illustrates the first embodiment of the present invention;
Figure 25 illustrates the first embodiment of the present invention;
Figure 26 illustrates the first embodiment of the present invention;
Figure 27 illustrates the first embodiment of the present invention;
Figure 28 illustrates the first embodiment of the present invention;
Figure 29 illustrates the first embodiment of the present invention;
Figure 30 illustrates the first embodiment of the present invention;
Figure 31 illustrates the first embodiment of the present invention;
Figure 32 illustrates the first embodiment of the present invention;
Figure 33 illustrates the first embodiment of the present invention;
Figure 34 illustrates the first embodiment of the present invention;
Figure 35 illustrates the first embodiment of the present invention;
Figure 36 illustrates the first embodiment of the present invention;
Figure 37 illustrates a second embodiment of the present invention;
Figure 38 illustrates the second embodiment of the present invention;
Figure 39 illustrates the second embodiment of the present invention;
Figure 40 illustrates the second embodiment of the present invention;
Figure 41 illustrates the second embodiment of the present invention;
Figure 42 illustrates the second embodiment of the present invention;
Figure 43 illustrates the second embodiment of the present invention;

Figure 44 illustrates the second embodiment of the present invention;
Figure 45 illustrates the second embodiment of the present invention;
Figure 46 illustrates the second embodiment of the present invention;
Figure 47 illustrates the second embodiment of the present invention;
Figure 48 illustrates the second embodiment of the present invention;
Figure 49 illustrates the second embodiment of the present invention;
Figure 50 illustrates the second embodiment of the present invention;
Figure 51 illustrates the second embodiment of the present invention;
Figure 52 illustrates the second embodiment of the present invention;
Figure 53 illustrates the second embodiment of the present invention;
Figure 54 illustrates the second embodiment of the present invention;
Figure 55 illustrates the second embodiment of the present invention;
Figure 56 illustrates the second embodiment of the present invention;
Figure57 illustrates the second embodiment of the present invention;
Figure 58 illustrates the second embodiment of the present invention;
Figure 59 illustrates the second embodiment of the present invention;
Figure 60 illustrates the second embodiment of the present invention;
Figure 61 illustrates the second embodiment of the present invention;
Figure 62 illustrates the second embodiment of the present invention;
Figure 63 illustrates the second embodiment of the present invention;
Figure 64 illustrates the second embodiment of the present invention;
Figure 65 illustrates the second embodiment of the present invention;
Figure 66 illustrates the second embodiment of the present invention;
Figure 67 illustrates the second embodiment of the present invention;
Figure 68 illustrates the second embodiment of the present invention;
Figure 69 illustrates the second embodiment of the present invention;
Figure 70 illustrates the second embodiment of the present invention;
Figure 71 illustrates the second embodiment of the present invention;
Figure 72 illustrates the second embodiment of the present invention;

Figure 73 illustrates the second embodiment of the present invention;

Figure 74 illustrates the second embodiment of the present invention;

Figure 75 illustrates the second embodiment of the present invention;

Figure 76 illustrates the second embodiment of the present invention;

Figure 77 illustrates the second embodiment of the present invention;

Figure 78 illustrates the second embodiment of the present invention;

Figure 79 illustrates the second embodiment of the present invention;

Figure 80 illustrates a third embodiment of the present invention;

Figure 81 illustrates a mode of expression of codes according to a previously existing technology;

Figure 82 illustrates a mode of expression of codes according to a previously existing technology;

Figure 83 illustrates the maximum region where information dot is located at the time of reading the dot pattern using a camera;

Figure 84 illustrates the maximum region where information dot is located at the time of reading the dot pattern using a camera;

Figure 85 illustrates a generation method of a dot pattern;

Figure 86 illustrates a method of reading a dot pattern;

Figure 87 illustrates calculation of ranking of a distance of an interval between information dots;

Figure 88 illustrates an example of an optical reading device;

Figure 89 illustrates an example of an optical reading device;

Figure 90 illustrates an example of an optical reading device; and

Figure 91 illustrates an example of an optical reading device.

Description of Embodiments

Embodiments for carrying out the present invention will be described.

<First embodiment>

A first embodiment of the present invention will be described. The present embodiment is constituted by one row (or column), and is a dot pattern where two or more dots are arranged in the row (or column).

This dot pattern is a kind of a two dimensional code, and is one where codes (numeric value or information) are encoded using a fine dot.

As for each dot pattern where a different code is encoded, an arrangement of information dots are determined so that an interval between information dots arranged adjacently may have a prescribed distance. Then, codes are encoded by at least any of lengths ranking permutations, lengths ranking combinations, ratio permutations, ratio combinations, or absolute values, absolute value permutations, absolute value combinations with respect to a distance value of an interval between information dots arranged adjacently.

Hereafter, an aspect of such dot pattern will be described specifically.

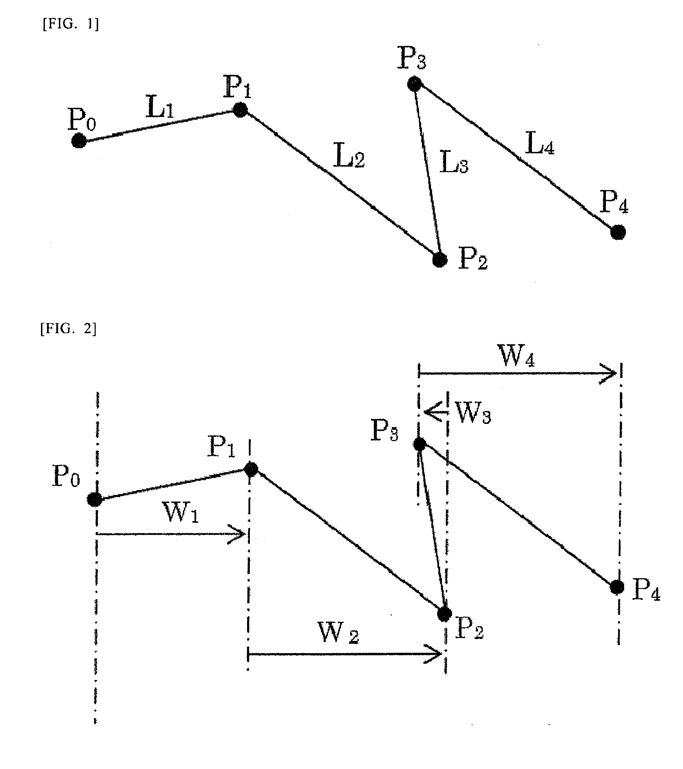

FIGS. 1, 2, 3 and 4 illustrate a dot pattern where codes are encoded based on a value of a distance of an interval between information dots or a distance of a prescribed direction interval held by an information dot.

FIG. 1 shows a dot pattern where codes are encoded based on a value of a distance of an interval between information dots.

In generation of the present dot pattern, first, a starting-point information dot P0 which is to be a starting point for arranging information dots in a prescribed order is arranged. Then, an information dot P1 is arranged with a prescribed distance. An information dot P2 is arranged at a position located at a prescribed distance from the information dot P1. In the same way, an information dot P3 is arranged, and an end-point information dot P4 which is to be an end point for arranging information dots is arranged, and a dot pattern is generated.

Encoding of codes is performed by at least any of lengths ranking permutations, lengths ranking combinations, ratio permutations, ratio combinations, or absolute values, absolute value permutations, absolute value combinations with respect to a distance L1 between the information dots P0 and P1, a distance L2 between P1 and P2, a distance L3 between P2 and P3, and a distance L4 between P3 and P4. The lengths ranking is to rank the distances L1 to L4 of the interval between information dots from No. (1) to No. (4). Note that, when there are two distances having the same distance of the interval between information dots, the distances having a rank from No. (1) to No. (3) will be allocated to four of the interval between information dots. When there are three distances having the same distance, the distances having a rank from No. (1) to No. (2) will be allocated to four of the interval between information dots. When four of the distances are all the same, distances having a rank of only No. (1) will be allocated to four of the interval between information dots. These ranks may be ranked in ascending order or descending order. For example, in FIG. 1, when ranked in ascending order, the allocations will be L1: No. (1), L2: No. (3), L3: No. (2) and L4: No. (4). In addition, in a case of L2=L4, the allocations will be L1: No. (1), L2: No. (3), L3: No. (2) and L4: No. (3). Here, with respect to four of the interval between information dots, any of relative distances which become to be four different ranks of No. (1) to No. (4) are allocated, and however, when candidates for further more of different distances exist in the interval between information dots, distances having any rank may be allocated, while ranked, to four of the interval between information dots.

For example, in a case where there is six different distances which are to be allocated to distances of interval between information dots, six ranks are allocated to the six different distances, and distances which are to be four ranks (No. (1), No. (3), No. (4), No. (6)) from them are allocated to distances of the interval between information dots, and then, the allocations will be L1: No. (1), L2: No. (4), L3: No. (3) and L4: No. (6). In a case where the number of the different distances to be candidates is more than the number of intervals between information dots, it is necessary that a list of absolute value distances to be the candidates and ranking thereof are recorded in advance, and an absolute value of a distance of interval between information dots is compared, and the ranks are checked. In a case where the number of the different distances to be candidates is the same as the number of intervals between information dots or less than that, this list is not necessary, and the ranking may be determined by measuring a distance of an interval between information dots. In that case, while a printing accuracy and a distortion of a print media, an accuracy of an optical reading device, and furthermore, a deformation of a photographed image generated in a case of carrying out photographing with the optical reading device inclined due to being held on hand etc. are taken into consideration, a value of a distance of an interval between information dots may be configure so that the ranking may be determined on the premise that there is a change of the maximum of 5 to 10% relatively of the distance. Therefore, the configure of the distance where the ranking is changed by one needs a change to the extent of being surely distinguishable from a change of a distance of approximate 5 to 10%. Thereby, when a change of a distance of an interval between information dots is less than approximate 5 to 10%, they may be assumed to have the same rank. A way of thinking with respect to changes such as these is applicable also to a case where candidates for further more of different distances exist with respect to the interval between information dots. Note that the change becomes further large when the number of distances to be allocated with respect to a distance of an interval between information dots increase. However, when there is not a deformation etc. generated at the time of photographing by an optical reading device, this does not apply.

The ratio means a ratio of the distance L1 to L4 to a distance of a prescribed reference. For example, while a distance of a prescribed reference is assumed to be a distance L0 between P0 and P4, the ratio may be assumed to be a ratio of the distance L1 to L4 to the distance L0, and may be assumed to be a ratio to any one of distances of the interval between information dots (for example, distance L1).

FIG. 2 illustrates a dot pattern where codes are encoded based on a value of a distance of a prescribed direction interval.

With respect to each information dot, a straight line having a prescribed angle is drawn, and calculated is a distance between a straight line drawn with respect to a certain information dot and a straight line in the same direction drawn with respect to an adjacent information dot. This is a distance of a prescribed direction interval. In FIG. 2, a vertical line passing through each information dot is drawn. Then, a distance between a straight line passing through P0 and a straight line passing through P1 is assumed to be W1, a distance between a straight line passing through P1 and a straight line passing through P2 is assumed to be W2, a distance between a straight line passing through P2 and a straight line passing through P3 is assumed to be W3, and a distance between a straight line passing through P3 and a straight line passing through P4 is assumed to be W4. By at least any of lengths ranking permutations, lengths ranking combinations, ratio permutations, ratio combinations, or absolute values, absolute value permutations, absolute value combinations with respect to these W1 to W4, codes are encoded.

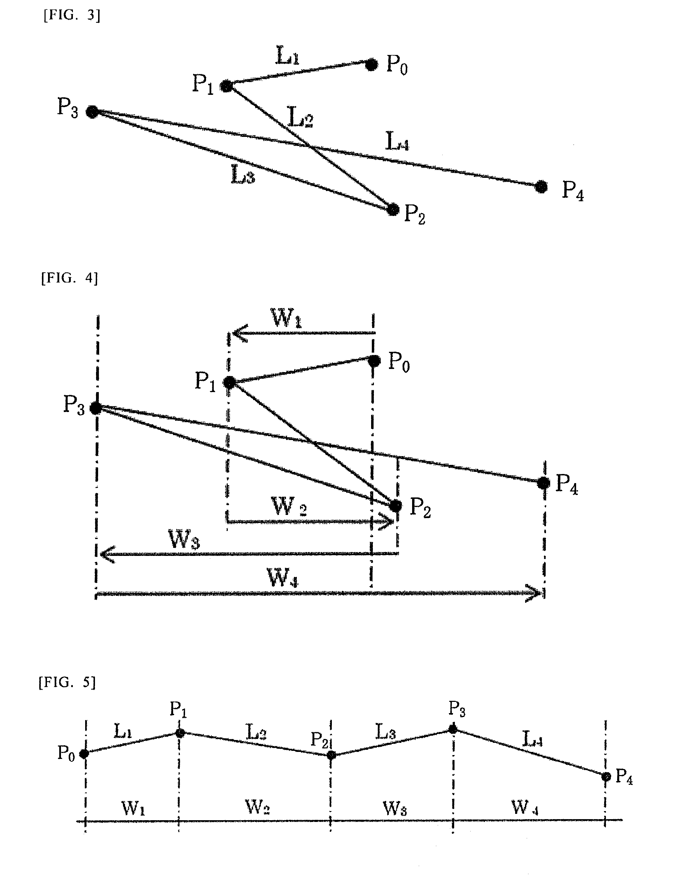

FIGS. 3 and 4 are an example where information dots are arranged so that separate lines of the interval between information dots may intersect without information dots being arranged in a belt-like shape as illustrated in FIG. 1. In this way, if information dots arranged in a prescribed order can only be specified, what kind of an arrangement may be applicable. Here, FIG. 3 illustrates a case where codes are encoded based on the distances L1 to L4 of the interval between information dots. FIG. 4 illustrates a case where codes are encoded based on the distances of the prescribed direction interval W1 to W4.

In this way, in the present invention, even when a dot pattern in appearance is the same, a encoded code comes to be different depending on an order in which information dots are arranged and a method of encoding of codes.

A dot pattern like this is printed on a paper surface (or displayed by a display, and this dot pattern is photographed by a camera device, and the image data are analyzed by a processor, and thereby, codes can be decoded. Then, a variety of processing corresponding to the decoded codes, for example, outputting of contents such as a voice, an image and a video, execution of a program and operation instructions such as sound reproduction and video recording etc. are carried out.

In analysis of the image data, information dots are extracted from the image data, and a value of a distance of an interval between information dots arranged adjacently or a distance of a prescribed direction interval are calculated, and decoded is codes corresponding to lengths ranking permutations, lengths ranking combinations, ratio permutations or ratio combinations, or absolute values, absolute value permutations, absolute value combinations with respect to a value of a distance of an interval between information dots etc.

In addition, when a value of the distance between dots is compared, a deviation in printing, a distortion of a printing medium, a camera inclination at the time of dot pattern reading are taken into consideration, and on the premise that an error of a value of a distance of an interval between information dots is within a prescribed percent (approximately, 5 to 10%), an analysis program is preferred to have been designed so that a distance of an interval between information dots are determined.

At this time, even when a dot arranged at the prescribed position on data has been printed (or read) while deviated actually from the prescribed position, if the position of the read dot is in a prescribed region with the prescribed position as a center, the analysis program is preferred to have been designed so that the dot may be recognized to have been arranged at the prescribed position on the data.

Note that various kinds of lines described in the specification and drawings such as a line segment connecting information dots mutually and a vertical line drawn with respect to each information dot are provided virtually, and do not exist in actually printed dot patterns. Descriptions of the present specification and drawings in the following are also the same as the above.

FIG. 5 illustrates an arrangement where an information dot of the next order is arranged at a position where a value of a distance of an interval between information dots is the nearest from the information dot.

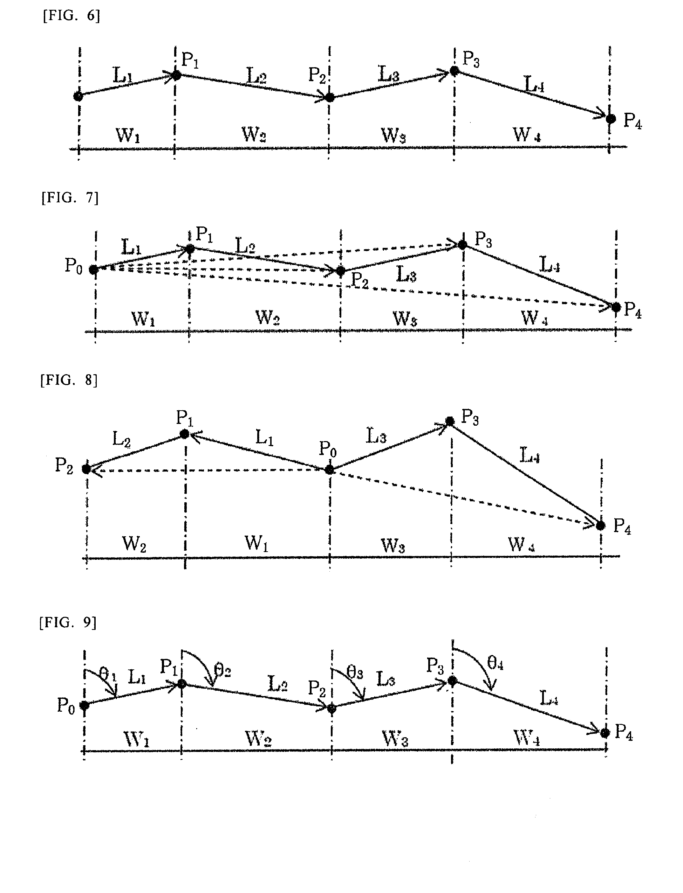

FIG. 6 illustrates an arrangement where an information dot of the next order is arranged in the prescribed direction from the information dot.

In this case, when P1 is arranged, for example, P1 is arranged in a pre-determined distance and direction (e.g., 15 degrees) from P0. P2 is arranged in a pre-determined distance and direction from P1. In the same way, P3 and P4 are arranged.

FIGS. 7 and 8 illustrate a case where an arrangement of information dots is determined depending on a distance and direction from a certain specific information dot.

FIG. 7 illustrates an example where an information dot is arranged in a prescribed distance and direction from the starting-point information dot P0.

In this case, information dots P1 to P4 are arranged in pre-determined distances and directions from P0.

FIG. 8 illustrates an example where information dots are arranged in prescribed distances and directions from the information dot P0.

In this case, information dots are arranged in order of P1 and P2, and P3 and P4 in pre-determined distances and in the two directions from P0. As the result, P2 and P4 are arranged as end-point information dots. Although not illustrated, information dots are arranged in the plural directions more than three from P0, and end-point information dots may be arranged at end points in the plural directions.

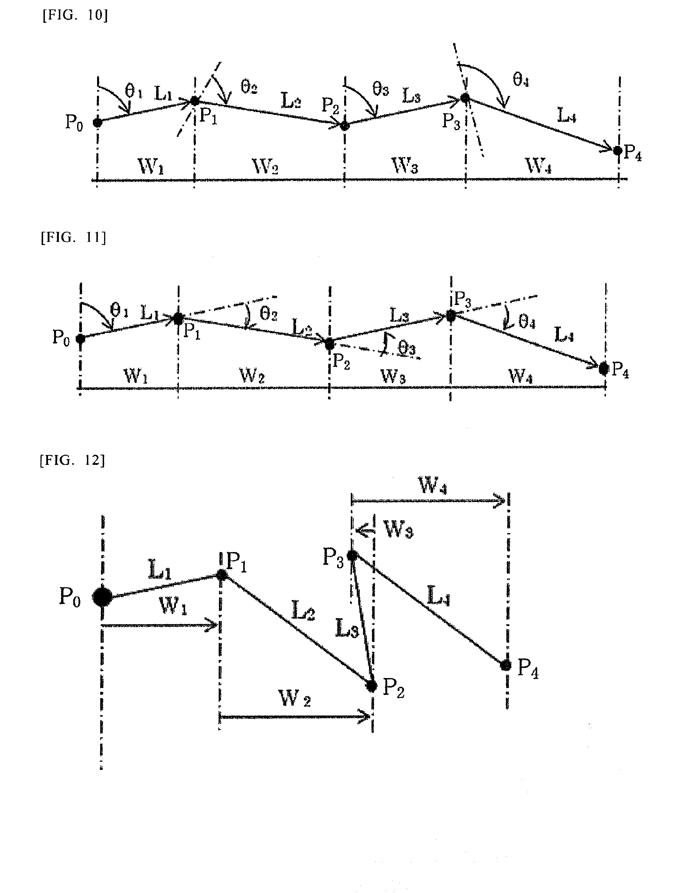

FIGS. 9 and 10 illustrate an arrangement where an information dot of the next order is arranged at a position having a prescribed distance and prescribed rotation angle from an information dot.

FIG. 9 illustrates an arrangement where a prescribed direction (reference line indicated by a dashed line) made to be a rotation angle reference is made to be a vertical line passing through an information dot with respect to all the information dots, and a rotation angle is determined.

First, the information dot P1 is arranged at a position that is located in a direction rotated clockwise by a prescribed angle $\theta 1$ with P0 as a center from a vertical line passing through P0, and has the prescribed distance L1 from P0. Next, the information dot P2 is arranged at a position that is located in a direction rotated clockwise by a prescribed angle $2\theta$ with P1 as a center from a vertical line passing through P1, and has the prescribed distance L2 from P1. In the same way, information dots P3 and P4 are arranged.

Then, codes are encoded by at least any of lengths ranking permutations, lengths ranking combinations, ratio permutations, ratio combinations, or absolute values, absolute value permutations, absolute value combinations with respect to the distances of the interval between information dots L1, L2, L3 and L4, or the distances of a prescribed direction interval of information dots W1, W2, W3 and W4.,

FIG. 10 illustrates an arrangement where a prescribed direction (reference line indicated by a dashed line) made to be a rotation angle reference is made to be different from each other depending on an information dot.

First, the information dot P1 is arranged at a position that is located in a direction rotated clockwise by a prescribed angle $\theta 1$ with P0 as a center from a vertical line passing through P0 and has the prescribed distance L1 from P0. Next, on the basis of a position that is located in a direction rotated by an angle $\alpha$ degrees with P1 as a center from a vertical line passing through P1, the information dot P2 is arranged at a position that is located in a direction rotated clockwise by a prescribed angle $\theta 2$ with P1 as a center from the position and has the prescribed distance L2 from P1. Next, the information dot P3 is arranged at a position that is located in a direction rotated clockwise by a prescribed angle $\theta 3$ with P2 as a center from a vertical line passing through P2 and has the prescribed distance L3 from P2. At the last, on the basis of a position that is located in a direction rotated by an angle $\beta$ degrees with P3 as a center from a vertical line passing through P3, the information dot P4 is arranged at a position that is located in a direction rotated clockwise by a prescribed angle $\theta 4$ with P3 as a center from the position and has the prescribed distance L4 from P3.

Note that, in FIGS. 9 and 10, on the basis of combinations between rotation angles $\theta 1$, $\theta 2$, $\theta 3$ and $\theta 4$ and distances L1, L2, L3 and L4 of interval between information dots, which are arranged adjacently to each rotation angle, or combinations between rotation angles $\theta 1$, $\theta 2$, $\theta 3$ and $\theta 4$ and distances in a prescribed direction W1, W2, W3 and W4 of the interval between information dots, which are arranged adjacently to each rotation angle, codes may be encoded.

FIG. 11 illustrates a case where an information dot next to the starting-point information dot is defined as a prescribed rotation angle with respect to a prescribed direction from this starting-point information dot, and information dots subsequent to that are each defined as a prescribed rotation angle with respect to a line segment connecting the second last information dot with the last information dot.

First, the information dot P1 is arranged at a position that is located in a direction rotated clockwise by a prescribed angle $\theta1$ with P0 as a center from a vertical line passing through P0 and has the prescribed distance L1 from P0. Next, the information dot P2 is arranged at a position that is located in a direction rotated by a prescribed angle $\theta2$ with P1 as a center from a straight line passing through P0 and P1 and has the prescribed distance L1 from P1. Next, the information dot P3 is arranged at a position that is located in a direction rotated by a prescribed angle $\theta3$ with P2 as a center from a straight line passing through P1 and P2 and has the prescribed distance L3 from P2. In the same way, the information dot P4 is arranged.

Note that, in FIG. 11, on the basis of combinations between rotation angles $\theta1$, $\theta2$, $\theta3$ and $\theta4$ and distances L1, L2, L3 and L4 of the interval between information dots, which are arranged adjacently to each rotation angle, or combinations between rotation angles $\theta1$, $\theta2$, $\theta3$ and $04$ and distances in a prescribed direction W1, W2, W3 and W4 of the interval between information dots, which are arranged adjacently to each rotation angle, codes may be encoded.

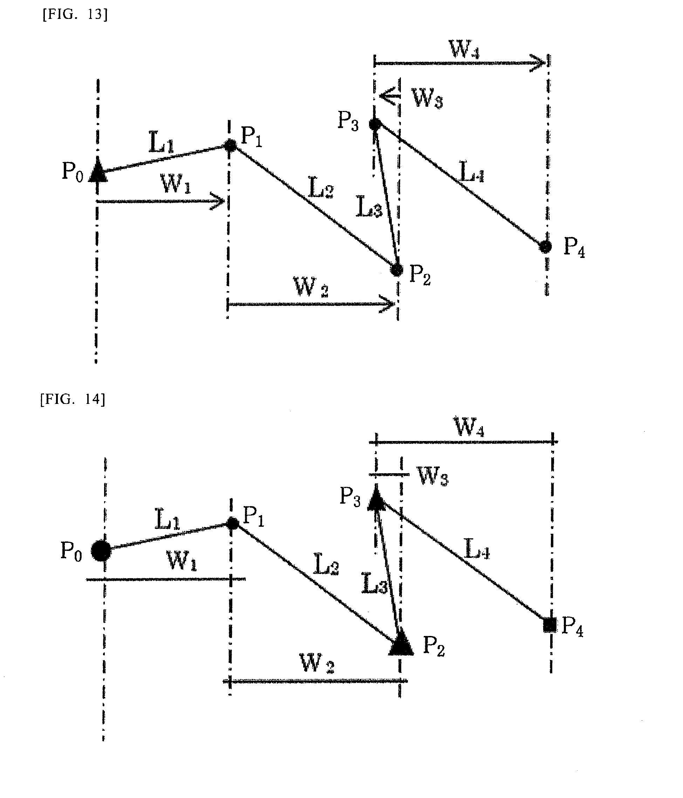

FIGS. 12 and 13 illustrate an arrangement with respect to the starting-point information dot.

After a dot pattern is read by an optical reader, if which information dot is the starting-point information dot cannot be distinguished in a processor, it may be impossible to analyze a dot pattern accurately, and to output contents corresponding to the dot pattern. Therefore, by making a size and shape of the starting-point information dot different from other information dots, it has been made to be possible to identify easily which information dot is the starting-point information dot.

FIG. 12 illustrates an arrangement where a size of the starting-point information dot is made to be different from other information dots. A size of the starting-point information dot has been larger than other information dots.

FIG. 13 illustrates an arrangement where a shape of the starting-point information dot is made to be different. A shape of the starting-point information dot is configured as a triangle, and other information dots are configured as a circle. Note that a shape of a dot is not limited to an example of FIG. 13, and it is needless to say that any shape may be applicable as long as the starting-point information dot and other information dots are identifiable.

Note that the starting-point information dot may be configured so as to be different from other information dots in colors, an arrangement position or optical characteristics in addition to a size and shape. In addition, it may be made for the starting-point information dot and other information dots to be identifiable by combining these.

FIG. 14 illustrates a case where the order of information dots is made able to be specified by making a shape of information dots different from each other.

As described in FIG. 1, even when an arrangement of information dots in appearance is the same, a way of mutual connection of information dots may be different, that is, the arrangement order of information dots may be different. Unless the arrangement order of information dots is able to be recognized correctly, it may be impossible to analyze a dot pattern accurately and execute processing corresponding to the dot pattern.

Then, in FIG. 14, a shape and size of each information dot are made to be different from each other. That is, P0 is made to be a big circle, P1 is made to be a small circle, P2 is made to be a big triangle, P3 is made to be a small triangle and P4 is made to be a quadrangle. When the arrangement order and a size /shape of an information dot have been matched in advance like "a big circle → a small circle → a big triangle → a small triangle → a quadrangle → a small quadrangle", In a case where the dot pattern is read by an optical reader, a processing device can recognize the arrangement order accurately, and can analyze the dot pattern accurately.

Note that specification of the order may be colors, an arrangement position, and optical characteristics of the information dot in addition to a size and shape of an information dot, and may be combinations of these. The arrangement position mentioned above means that an arrangement is carried out based on conditions such as the starting-point information dot is arranged at the end part of a specific direction. In addition, by collating the dot pattern with an arrangement pattern of information dots recorded in advance by pattern recognition, the arrangement order of information dots may be retrieved.

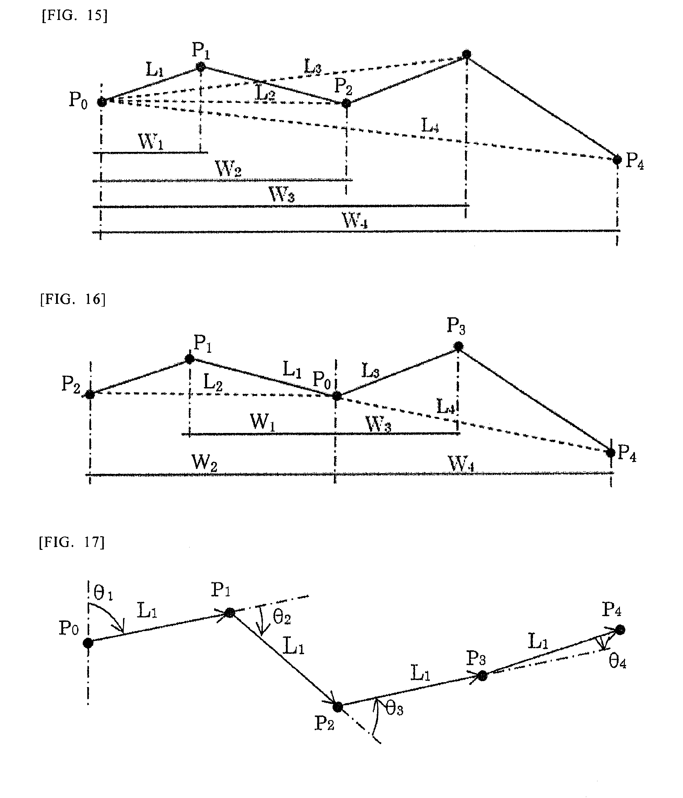

FIGS. 15 and 16 illustrate a case where codes are encoded based on distances other than a distance of an interval between information dots arranged adjacently.

FIG. 15 illustrates an arrangement where a value of a distance from the starting-point information dot P0 to each information dot, or a distance of a prescribed direction interval held by an information dot is assumed to be an index. When a distance of an interval between information dots is assumed to be an index, a distance of an interval between information dots P0 and P1 is assumed to be L1, a distance between P0 and P2 is assumed to be L2, a distance between P0 and P3 is assumed to be L3 and a distance between P0 and P4 is assumed to be L4, and codes are encoded by at least any of lengths ranking permutations, lengths ranking combinations, ratio permutations, ratio combinations, or absolute values, absolute value permutations, absolute value combinations with respect to L1 to L4. When a distance of a prescribed direction interval is assumed to an index, a distance of a prescribed direction interval of P0 and P1 is assumed to be W1, a distance of a prescribed direction interval of P0 and P2 is assumed to be W2, a distance of a prescribed direction interval of P0 and P3 is assumed to be W3 and a distance of a prescribed direction interval of P0 and P4 is assumed to be W4, and codes are encoded by at least any of lengths ranking permutations, lengths ranking combinations, ratio permutations, ratio combinations, or absolute values, absolute value permutations, absolute value combinations with respect to W1 to W4.

FIG. 16 illustrates an arrangement where a value of a distance from the information dot P0 to each information dot, or a distance of a prescribed direction interval held by an information dot is assumed to be an index. When a distance of an interval between information dots is assumed to be an index, a distance between information dots of P0 and P1 is assumed to be L1, a distance between P0 and P2 is assumed to be L2, a distance between P0 and P3 is assumed to be L3 and a distance between P0 and P4 is assumed to be L4, and codes are encoded by at least any of lengths ranking permutations, lengths ranking combinations, ratio permutations, ratio combinations, or absolute values, absolute value permutations, absolute value combinations with respect to L1 to L4. When a distance of a prescribed direction interval is assumed to an index, a distance in a horizontal direction between information dots of P0 and P1 is assumed to be W1, a distance in a horizontal direction between information dots of P0 and P2 is assumed to be W2, a distance in a horizontal direction between information dots of P0 and P3 is assumed to be W3 and a distance in a horizontal direction between information dots P0 and P4 is assumed to be W4, and codes are encoded by at least any of lengths ranking permutations, lengths ranking combinations, ratio permutations, ratio combinations, or absolute values, absolute value permutations, absolute value combinations with respect to W1 to W4.

FIGS. 17 to 20 illustrate a case where a distance of an interval between information dots is constant.

In examples mentioned above, by making a distance of an interval between information dots etc. different, codes have been encoded. In examples of FIGS. 17 to 20, a distance of an interval between information dots etc. is made to be constant, and a rotation angle is made to be different, and thereby, codes are encoded.

FIG. 17 illustrates an arrangement where an angle between mutual straight lines connecting adjacent information dots is assumed to be an index.

A rotation angle between the vertical line passing through P0 and the straight line connecting P0 with P1 (straight line between P0 and PI) is assumed to be $\theta 1$. A rotation angle between the straight line with the straight line between P0 and P1 extended rightward and the straight line between P1 and P2 is assumed to be $\theta 2$. A rotation angle between the straight line with the straight line between P1 and P2 extended rightward and the straight line between P2 and P3 is assumed to be $\theta 3$. A rotation angle between the straight line with the straight line between P2 and P3 extended rightward and the straight line between P3 and P4 is assumed to be $\theta 4$. Codes are encoded by at least any of size ranking permutations, size ranking combinations, ratio permutations, ratio combinations, or absolute values, absolute value permutations, absolute value combinations with respect to each rotation angle $\theta 1$, $\theta 2$, $\theta 3$ and $\theta 4$.

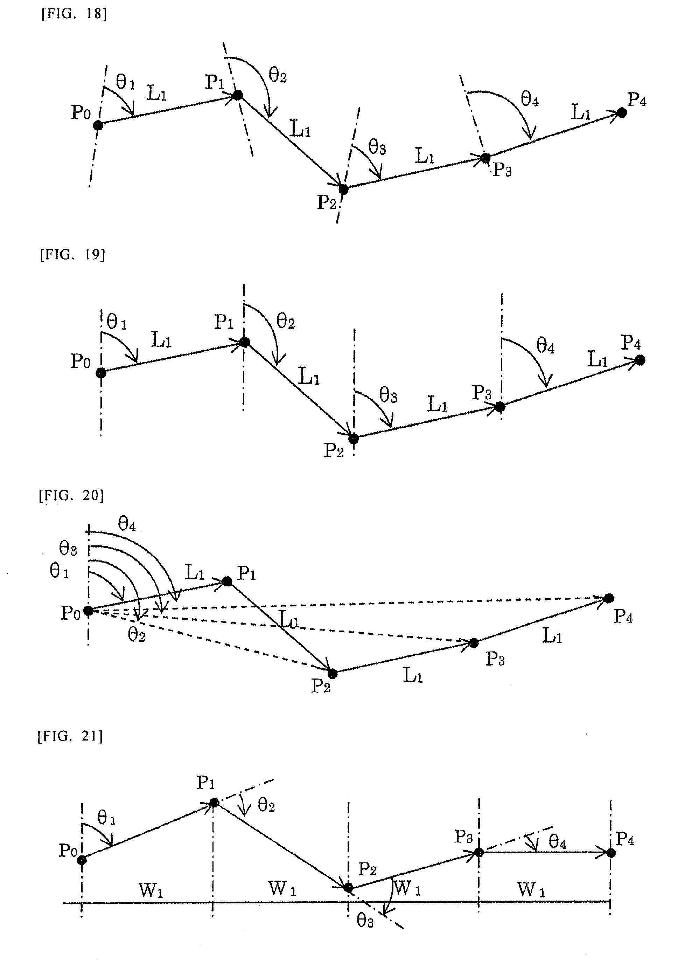

FIG. 18 illustrates an arrangement where codes are encoded on the basis of a rotation angle from a prescribed direction (reference line indicated by a dashed line) made to be a rotation angle reference passing through each information dot.

A straight line having an optional inclination passing through the information dot P0 is provided, and a rotation angle made by the straight line and the straight line between P0 and P1 is assumed to be $\theta 1$. A straight line having an optional inclination passing through the information dot P1 is provided, and a rotation angle made by the straight line and the straight line between P1 and P2 is assumed to be $\theta 2$. A straight line having an optional inclination passing through the information dot P2 is provided, and a rotation angle made by the straight line and the straight line between P2 and P3 is assumed to be $\theta 3$. A straight line having an optional inclination passing through the information dot P3 is provided, and a rotation angle made by the straight line and the straight line between P3 and P4 is assumed to be $\theta 4$. In the present example, the inclination of the straight line passing through each information dot is different for every information dot. Codes are encoded by at least any of size ranking permutations, size ranking combinations, ratio permutations, ratio combinations, or absolute values, absolute value permutations, absolute value combinations with respect to each rotation angle $\theta 1$, $\theta 2$, $\theta 3$ and $\theta 4$.

FIG. 19 illustrates an arrangement where codes are encoded on the basis of a rotation angle where a prescribed direction (reference line indicated by a dashed line) made to be a rotation angle reference passing through each information dot is made to be a vertical line.

A vertical line passing through the information dot P0 is provided, and a rotation angle made by the vertical line and the straight line between P0 and P1 is assumed to be $\theta 1$. A vertical line passing through the information dot P1 is provided, and a rotation angle made by the vertical line and the straight line between P1 and P2 is assumed to be $\theta 2$. A vertical line passing through the information dot P2 is provided, and a rotation angle made by the vertical line and the straight line between P2 and P3 is assumed to be $\theta 3$. A vertical line passing through the information dot P3 is provided virtually, and a rotation angle made by the vertical line and the straight line between P3 and P4 is assumed to be $\theta 4$. Codes are

encoded by at least any of size ranking permutations, size ranking combinations, ratio permutations, ratio combinations, or absolute values, absolute value permutations, absolute value combinations with respect to each rotation angle θ1, θ2, θ3 and θ4.

FIG. 20 illustrates an arrangement where codes are encoded on the basis of a rotation angle made by a vertical line passing through the starting-point information dot and a straight line connecting the starting-point information dot and each of the other information dots.

A vertical line passing through the starting-point information dot P0 is provided. A rotation angle made by the vertical line and the straight line between P0 and P1 is assumed to be θ1. In the same way, a rotation angle made by the vertical line and the straight line between P0 and P2 is assumed to be θ2, a rotation angle made by the vertical line and the straight line between P0 and P3 is assumed to be θ3, and a rotation angle made by the vertical line and the straight line between P0 and P4 is assumed to be θ4. Codes are encoded by at least any of size ranking permutations, size ranking combinations, ratio permutations, ratio combinations, or absolute values, absolute value permutations, absolute value combinations with respect to each rotation angle θ1, θ2, θ3 and θ4.

FIGS. 21 to 24 illustrate a case where the distance of a prescribed direction interval held by an information dot is made to be constant.

In examples mentioned above, codes have been encoded by making different a distance of an interval between information dots or the distance of a prescribed direction interval. In examples of FIGS. 21 to 24, a distance in the prescribed direction held by an information dot is assumed to be constant and W1, and a rotation angle is made to be different, and thereby, codes are encoded.

FIG. 21 illustrates an arrangement where a rotation angle made by mutual straight lines connecting adjacent information dots is assumed to be an index.

A rotation angle between the vertical line passing through P0 and the straight line (straight line between P0 and PI) connecting P0 and P1 is assumed to be θ1. A rotation angle between the straight line with the straight line between P0 and P1 extended rightward and the straight line between P1 and P2 is assumed to be θ2. A rotation angle between the straight line with the straight line between P1 and P2 extended rightward and the straight line between P2 and P3 is assumed to be θ3. A rotation angle between the straight line with the straight line between P2 and P3 extended rightward and the straight line between P3 and P4 is assumed to be θ4. Codes are encoded by at least any of size ranking permutations, size ranking combinations, ratio permutations, ratio combinations, or absolute values, absolute value permutations, absolute value combinations with respect to each rotation angle θ1, θ2, θ3 and θ4.

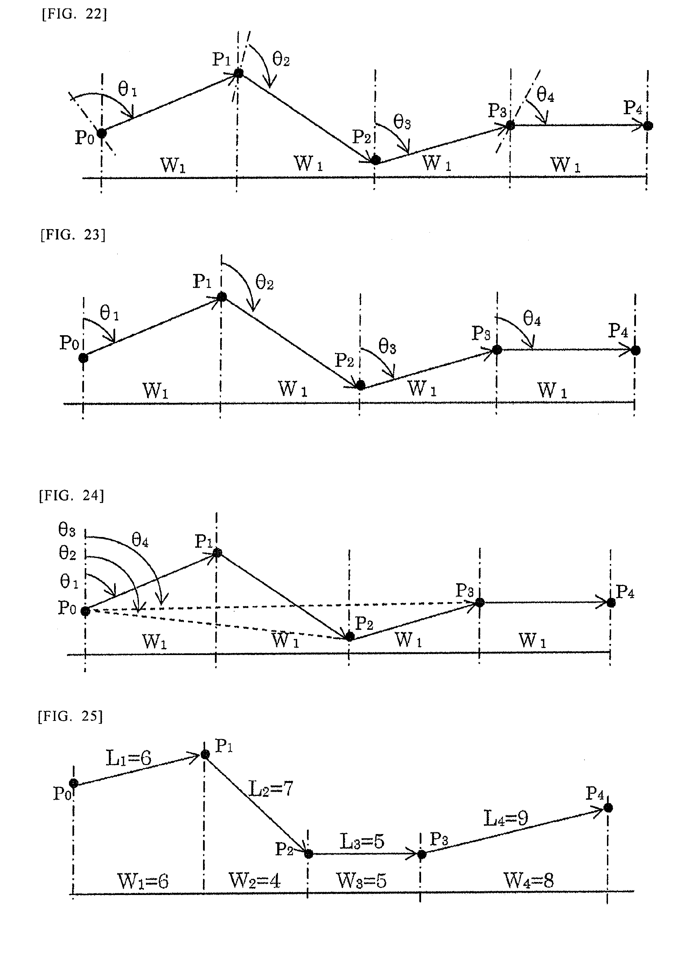

FIG. 22 illustrates an arrangement where codes are encoded on the basis of a rotation angle from a prescribed direction (reference line indicated by a dashed line) made to be a rotation angle reference passing through each information dot.

A straight line having an optional inclination passing through the information dot P0 is provided, and a rotation angle made by the straight line and the straight line between P0 and P1 is assumed to be θ1. A straight line having an optional inclination passing through the information dot P1 is provided, and a rotation angle made by the straight line and the straight line between P1 and P2 is assumed to be θ2. A straight line having an optional inclination passing through the information dot P2 is provided, and a rotation angle made by the straight line and the straight line between P2 and P3 is assumed to be θ3. A straight line having an optional inclination passing through the information dot P3 is provided, and a rotation angle made by the straight line and the straight line between P3 and P4 is assumed to be θ4. In the present example, an inclination of the straight line passing through each information dot is different for every information dot. Codes are encoded by at least any of size ranking permutations, size ranking combinations, ratio permutations, ratio combinations, or absolute values, absolute value permutations, absolute value combinations with respect to each rotation angle θ1, θ2, θ3 and θ4.

FIG. 23 illustrates an arrangement where codes are encoded on the basis of a rotation angle where a prescribed direction (reference line indicated by a dashed line) made to be a rotation angle reference passing through each information dot is made to be a vertical line.

A vertical line passing through the information dot P0 is provided, and a rotation angle made by the vertical line and the straight line between P0 and P1 is assumed to be θ1. A vertical line passing through the information dot P1 is provided, and a rotation angle made by the vertical line and the straight line between P1 and P2 is assumed to be θ2. A vertical line passing through the information dot P2 is provided, and a rotation angle made by the vertical line and the straight line between P2 and P3 is assumed to be θ3. A vertical line passing through the information dot P3 is provided, and a rotation angle made by the vertical line and the straight line between P3 and P4 is assumed to be θ4. Codes are encoded by at least any of size ranking permutations, size ranking combinations, ratio permutations, ratio combinations, or absolute values, absolute value permutations, absolute value combinations with respect to each rotation angle θ1, θ2, θ3 and θ4.

FIG. 24 illustrates an arrangement where a prescribed direction (reference line indicated by a dashed line) made to be a rotation angle reference passing through the starting-point information dot is made to be a vertical line, and codes are encoded on the basis of a rotation angle made by the vertical line and a straight line connecting the starting-point information dot and each of the other information dots.

A vertical line passing through the starting-point information dot P0 is provided. A rotation angle made by the vertical line and the straight line between P0 and P1 is assumed to be θ1. In the same way, a rotation angle made by the vertical line and the straight line between P0 and P2 is assumed to be θ2, a rotation angle made by the vertical line and the straight line between P0 and P3 is assumed to be θ3, and a rotation angle made by the vertical line and the straight line between P0 and P4 is assumed to be θ4. Codes are encoded by at least any of size ranking permutations, size ranking combinations, ratio permutations, ratio combinations, or absolute values, absolute value permutations, absolute value combinations with respect to each rotation angle θ1, θ2, θ3 and θ4.

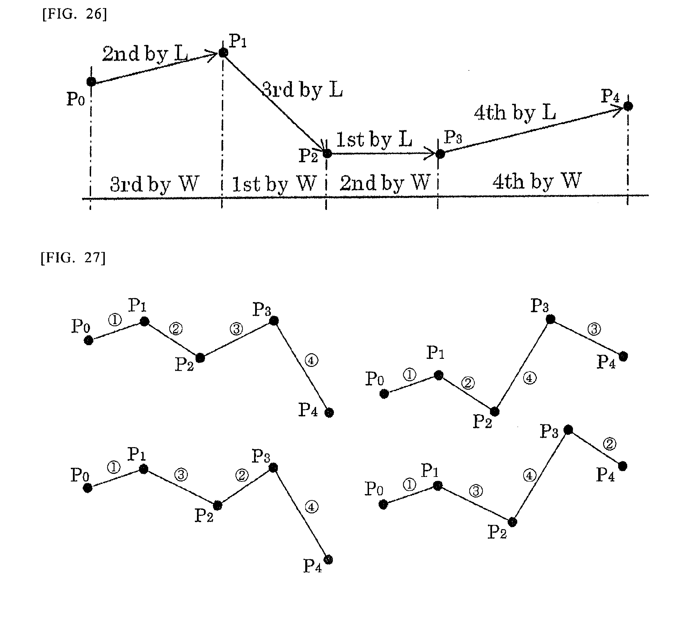

FIGS. 25 and 26 illustrate specifically a method to encode codes based on a distance.

As mentioned above, in the present dot pattern, by at least any of a sequence of numerical values (absolute value) with a distance value allocated, numerical value permutations, numerical value combinations, or lengths ranking permutations of distance values, lengths ranking combinations, codes are encoded.

FIG. 25 illustrates a case where codes are encoded based on numerical values.

For example, each distance of an interval between information dots is assumed to be L1=6, L2=7, L3=5, and L4=9, and a distance in a horizontal direction between each of information dots is assumed to be W1=6, W2=4, W3=5, and W4=8.

When codes are encoded by a sequence of numerical values, in a case where codes are encoded based on distance values between dots, codes encoded in the dot pattern will be 6759. When codes are encoded based on a distance in a prescribed direction between dots, codes encoded in the dot pattern will be 6458.

When codes are encoded by numerical value permutations, the encoding will be as follows.

When 1 to 10 are used as distance values, codes are encoded in the same way as the decimal system. Here, when all the distance values are different, in a case where encoding is carried out by permutations, codes of $10\times9\times8\times7=5040$ cases can be encoded, and in a case where encoding is carried out by combinations, codes of

$10\times9\times8\times7/4\times3\times2\times1=210$ cases can be encoded. Note that, when the same distances are included in distance values, it is needless to say that combinations increase furthermore.

In a case where 4 to 8, or 5 to 9 are used as distance values, encoding is carried out by permutations or combinations using four among them. In this case, in a case where encoding is carried out by permutations, codes of $5\times4\times3\times2=120$ cases can be encoded, and in a case where encoding is carried out by combinations, codes of $5\times4\times3\times2/4\times3\times2\times1=5$ cases can be encoded. Note that, when the same distances are included in distance values, it is needless to say that combinations increase furthermore.

Here, as for a numerical value to be allocated, an actual distance value may be allocated. However, when a user reads a dot pattern by an optical reader, reading is carried out in many cases in a state where the optical reader is inclined. In that case, the actual distance value will have been changed. Therefore, it is preferable that not an actual distance, but a numerical value represented by a value existing in a prescribed range is allocated.

FIG. 26 illustrates a case where codes are encoded based on permutations and combinations of lengths ranking of distance values.

In the same way as FIG. 25, in a case where L1=6, L2=7, L3=5, and L4=9, when the numbers are assigned in the ascending order of distance, the assignment will be as follows: L1=No. 2, L2=No. 3, L3=No. 1 and L4=No. 4. With respect to a distance of a prescribed direction interval, in a case where W1=6, W2=4, W3=5, and W4=8, the assignment will be as follows: W1=No. 3, W2=No. 1, W3=No. 2, and W4=No. 4.

In the number of distance sections, encoding is carried out based on permutations and combinations of No. 1 rank to No. 4 rank, No. 1 rank to No. 3 rank, No. 1 rank to No. 2 rank and all the same ranks.

As illustrated in FIG. 25, when a distance value is used directly, it is necessary to measure a distance between dots accurately. However, due to a distortion of a paper surface, and a deviation at the time of printing, etc., it is not easy to measure a distance between dots accurately. Then, by carrying out analyzing only based on distance lengths, reading and decoding of a dot pattern have made to be possible even when an exact distance is not acquired.

FIGS. 27 to 30 illustrate specific examples where encoding is carried out in the order of distances.

When codes are encoded by five information dots, the number of distance sections will be four. Encoding is carried out based on permutations and combinations of No. 1 rank to No. 4 rank, No. 1 rank to No. 3 rank, No. 1 rank to No. 2 rank and all the same ranks.

As illustrated in FIG. 27, when all of four distances are different, that is, when No. 1 rank to No. 4 rank exist, 24 cases of permutations and combinations such as "1→2→3→4", "1→2→4→3", etc., exist in all. Like a code 1 to "1→2→3→4", and a code 2 to "1→2→4→3"..., codes will have been allocated to each of combinations. As for codes, 1 to 24 are allocated.

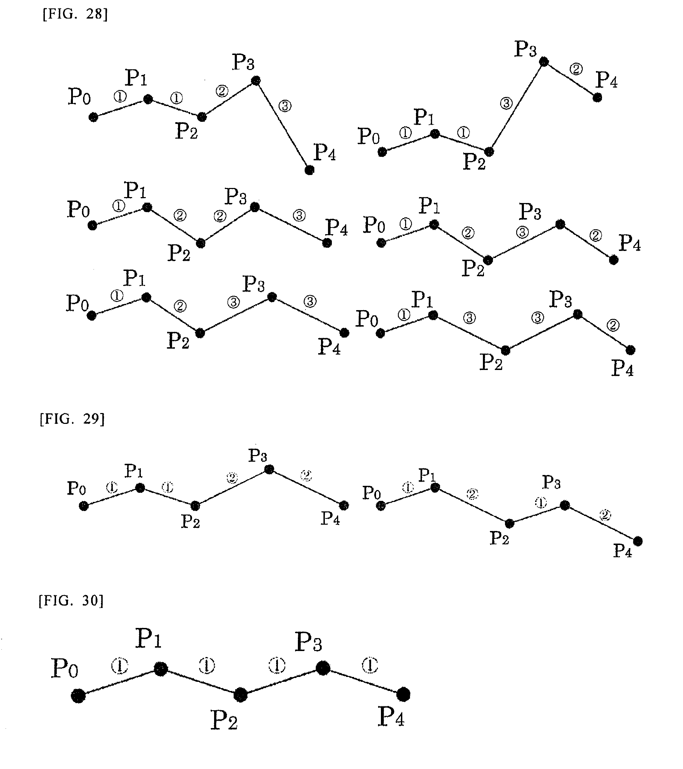

Next, as illustrated in FIG. 28, with respect to combinations in a case where there are two of the same distance, that is, in a case where No. 1 rank to No. 3 rank exist, a code 25 to a code 60 will have been allocated.

Next, as illustrated in FIG. 29, with respect to combinations in a case where there are three of the same distance, that is, in a case where No. 1 rank to No. 2 rank exist, a code 61 to a code 74 will have been allocated.

At the last, as illustrated in FIG. 30, in a case where all are the same distance, that is, in a case where all have the same rank, a code 75 is allocated.

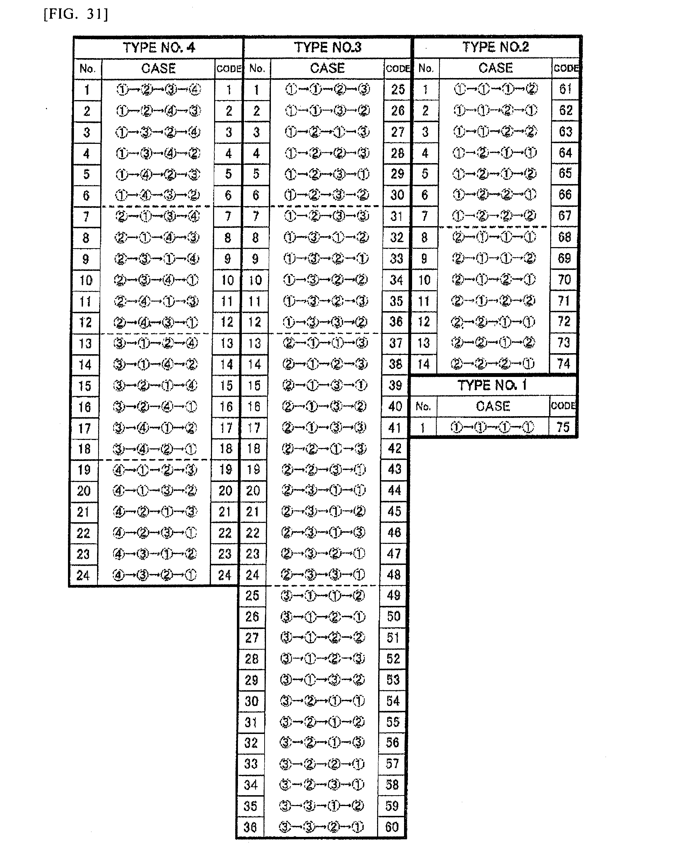

FIG. 31 is a table illustrating such code allocations.

Note that the code allocations indicated in FIG. 31 is an example, and it is optional what kind of code value is allocated to a case of combinations.

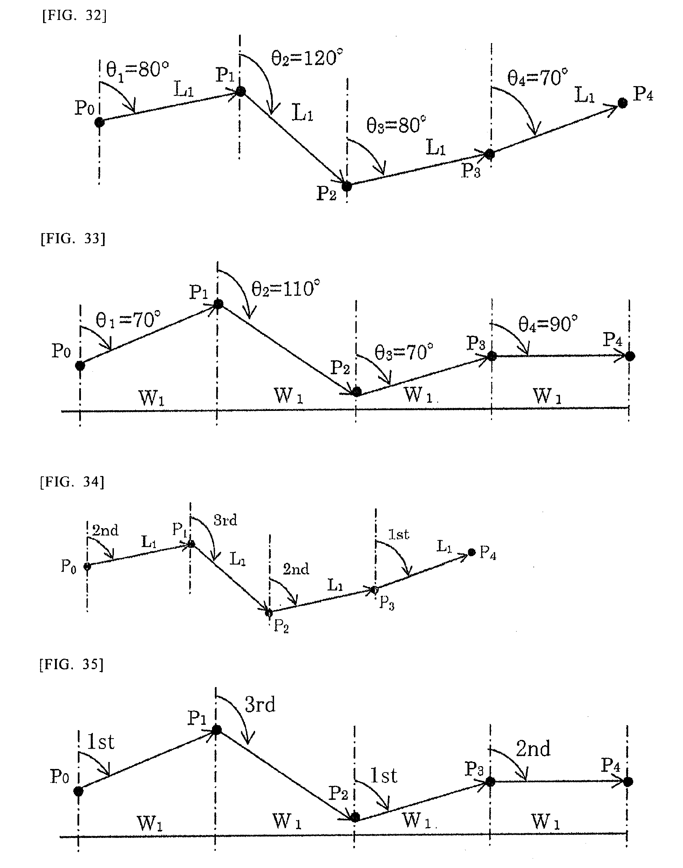

FIGS. 32 to 35 illustrate a method where codes are encoded based on a rotation angle.

In the present dot pattern, codes are encoded by at least any of size ranking permutations, size ranking combinations, ratio permutations, ratio combinations, or absolute values, absolute value permutations, absolute value combinations with respect to a value of a rotation angle.

FIG. 32 illustrates a case where codes are encoded based on a numerical value of a rotation angle in a dot pattern where a distance of an interval between information dots is constant.

A rotation angle in each information dot is as follows: θ1=80 degrees, θ2=120 degrees, 03=80 degrees and 04=70 degrees. Therefore, the code will be 801208070.

FIG. 33 illustrates a case where codes are encoded based on a numerical value of a rotation angle in a dot pattern where a distance of a prescribed direction interval of information dots is constant

A rotation angle in each information dot is as follows: θ1=70 degrees, θ2=110 degrees, θ3=70 degrees and θ4=90 degrees. Therefore, the code will be 701107090.

Note that, as for a numerical value to be allocated, a value of an actual rotation angle may be allocated. However, when a user reads a dot pattern by an optical reader, reading is carried out in many cases in a state where the optical reader is inclined. In that case, the actual distance value will have been changed. Therefore, it is preferable that not an actual rotation angle, but a numerical value represented by a value existing in a prescribed range is allocated.

FIG. 34 illustrates a case where codes are encoded based on size ranking permutations and combinations of a value of a rotation angle in a dot pattern where a distance of an interval between information dots is constant.

In the same way as FIG. 32, in a case where 01=80 degrees, θ2=120 degrees, 03=80 degrees and θ4=70 degrees, when the numbers are assigned in the ascending order of a rotation angle, the assignment will be as follows: θ1=No. 2, θ2=No. 3, θ3=No. 2, and θ4=No. 1.

In the number of rotation angle sections, encoding is carried out based on permutations and combinations of No. 1 rank to No. 4 rank, No. 1 rank to No. 3 rank, No. 1 rank to No. 2 rank and all the same ranks.

FIG. 35 illustrates a case where codes are encoded based on size ranking permutations and combinations of a value of a rotation angle in a dot pattern where a distance in a horizontal direction between information dots is constant.

In the same way as FIG. 33, in a case where θ1=70 degrees, θ2=110 degrees, θ3=70 degrees and θ4=90 degrees, when the numbers are assigned in the ascending order of a rotation angle, the assignment will be as follows: θ1=No. 1, θ2=No. 3, θ3=No. 1, and θ4=No. 2.

In the number of rotation angle sections, encoding is carried out based on permutations and combinations of No. 1 rank to No. 4 rank, No. 1 rank to No. 3 rank, No. 1 rank to No. 2 rank and all the same ranks.

As illustrated in the same FIGS. 32 and 33, when a value of rotation angle is used directly, it is necessary to measure accurately a rotation angle made by a vertical line passing through an information dot and a straight line connecting the information dot with the next information dot. However, due to a distortion of a paper surface, and a deviation at the time of printing, etc., it is not easy to measure a rotation angle accurately. Then, by carrying out analyzing only a size of a rotation angle, reading and decoding of a dot pattern has made to be possible even when an exact rotation angle is not acquired.

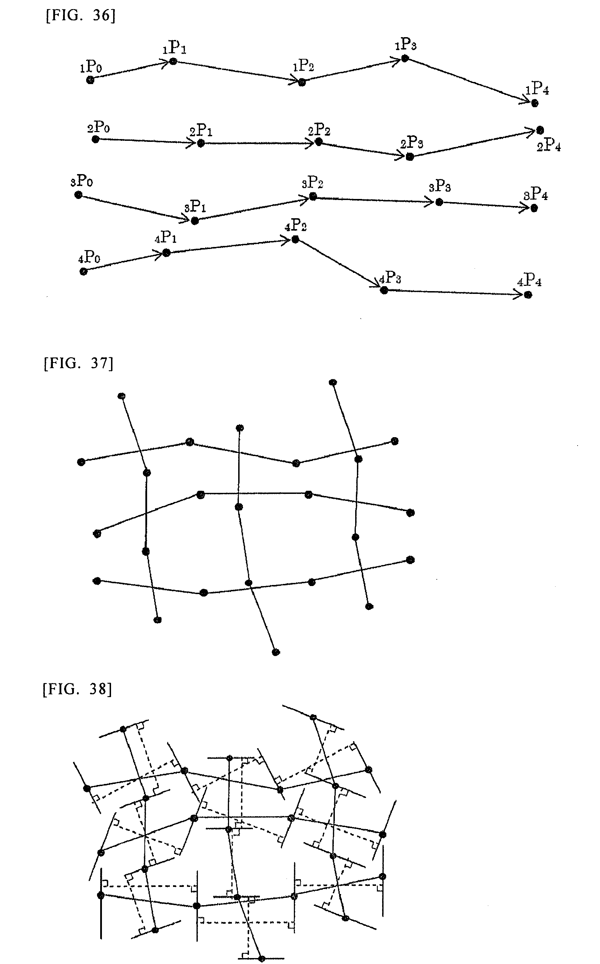

FIG. 36 illustrates an arrangement where two or more of the dot patterns mentioned above are arranged in a belt-like shape, and one code has been encoded.

In this way, as for the dot pattern of the present invention, it is also possible that two or more of dot patterns are arranged in vertical and horizontal directions, and one code is encoded based on a set of two or more dot patterns.

Thereby, it becomes possible to encode also contents having a large volume and data such as a program as a dot pattern.

<Second embodiment>

Next, a second embodiment will be described. A dot pattern of the present embodiment is a dot pattern made up of two or more rows and two or more columns.

FIG. 37 illustrates the dot pattern of the present invention. The dot pattern is provided with two or more information dots arranged in two or more rows and two or more columns.

This dot pattern is one in which codes are encoded, and an arrangement of the information dots is determined so that each dot pattern in which a different code is encoded may have a distance of an interval between information dots arranged adjacently.

Specifically, in each row and each column, codes are encoded by at least any of lengths ranking permutations, lengths ranking combinations, ratio permutations or ratio combinations, or absolute values, absolute value permutations, absolute value combinations with respect to a distance value of an interval between information dots arranged adjacently.

However, it is not necessary for all of the rows and columns to be used for encoding of codes, and only a part of rows and a part of columns may be used for encoding of codes.

Preferably, as for the dot pattern, in each row and each column, codes are encoded based only on at least any of lengths ranking permutations, lengths ranking combinations, ratio permutations, ratio combinations, or absolute values, absolute value permutations, absolute value combinations with respect to a distance value of an interval between information dots arranged adjacently. Thereby, a belt-like dot pattern is arranged in two dimensions, and the number of codes which can be defined by each belt-like dot pattern, are combined, and thereby, the number of codes of each row and each column which can be encoded can be increased greatly.

Note that, since encoding of codes is the same as one which has been described in the first embodiment, descriptions are omitted, here.

The present invention has superiority in the point that information is encoded based only on relative evaluation of a distance between mutually adjacent dots without depending on encoding information based on whether to arrange a dot in an arrangement direction or prescribed position from a prescribed position (virtual point) as is a conventional way, and has contributed to solution of problems such as:

> (1) computation for reading of a dot pattern can be simplified and speed enhancement thereof can be attained,
> (2) improvement in security is attained since it is difficult to decode codes visually,
> (3) an information amount for the small number of dots can be increased.

In addition, the dot patterns are usually connected in a prescribed interval in a vertical or horizontal direction.

The dot pattern is printed on a paper surface (or, displayed by a display measure), and this dot pattern is photographed by a camera device, and the image data are analyzed by a processor, and thereby, codes can be decoded.

Analyzing of the image data extracts an information dot from the image data, and calculates a value of a distance of an interval between information dots arranged adjacently, and decodes codes corresponding to lengths ranking permutations, lengths ranking combinations, ratio permutations, ratio combinations, or absolute values, absolute value permutations, absolute value combinations with respect to a value of a distance of an interval between information dots.

FIG. 38 illustrates a case where in the dot pattern of FIG. 37, codes are encoded based on a distance of a prescribed direction interval held by information dots.

With respect to each row and each column used for encoding of codes, each row and each column calculate a distance of a prescribed direction interval in a prescribed direction which each starting-point information dot has. Since the way of calculating a distance of a prescribed direction interval is the same as one which has been described in the first embodiment, descriptions are omitted, here.

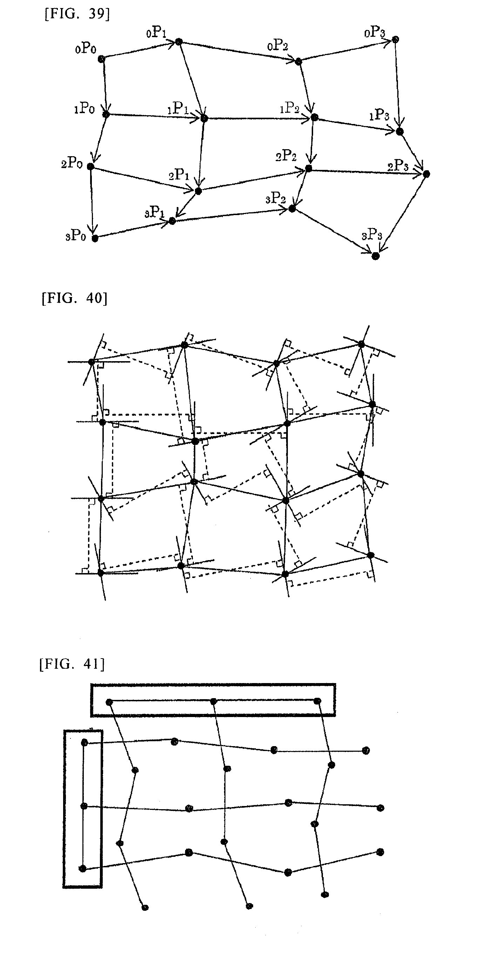

A dot pattern illustrated in FIG. 39 is a dot pattern where the dot pattern described in the first embodiment is arranged in two or more rows and two or more columns, and while information dots arranged adjacently are shared in each row and each column, both of the row and column are constituted. By sharing information dots of the row and column, the number of information dots can be reduced. Thereby, while a dot density is made to be small, an information amount can be made to increase furthermore. Note that, although not illustrated, a dot pattern where some information dots constitute either a row or a column may be applicable.

FIG. 40 illustrates a dot pattern where codes are encoded based on a distance of a prescribed direction interval held by information dots.

Each row and each column calculates a distance of a prescribed direction interval in a prescribed direction which each starting-point information dot has. Since the way of calculating a distance of a prescribed direction interval is the same as one which has been described in the first embodiment, descriptions are omitted, here.

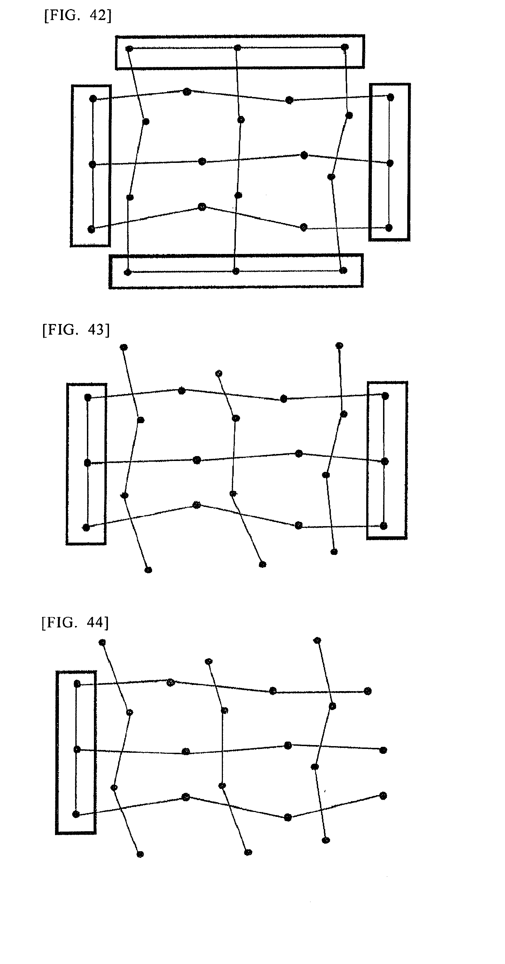

FIG. 41 illustrates a dot pattern where starting-point information dots arranged in an upper end row and a left end column (or end-point information dot) have become reference dots arranged in a prescribed interval on a virtual reference line orthogonal to a row or a column. Note that the reference dot may be arranged even in a lower end row and right end column. That is, starting-point information dots (or end-point information dots) of either row of the upper or lower end part and either column of the left or right end part may be made to be the row and column where reference dots are arranged. In addition, as illustrated in FIG. 42, starting-point information dots and end-point information dots of rows of the upper and lower ends and columns of the right and left ends may be made to be the rows and columns where reference dots are arranged. In addition, as illustrated in FIG. 43, starting-point information dots and end-point information dots of the columns of the right and left ends may be made to be the columns where reference dots are arranged. In addition, as illustrated in FIG. 44, starting-point information dots (or end-point information dots) of the left end column or right end column may be made to be the column where reference dots are arranged. Note that, without all parts of either column or row where starting-point information dots (or end-point information dots) are arranged being made to be reference dots, only a part may be made to be reference dots although not illustrated.

In this way, by arranging reference dots in the end part of a dot pattern, a boundary section of a dot pattern connected with starting-point information dots (or end-point information dots) will be able to be specified easily.

The reference dot, if arranged so as to be able to specify a direction of the dot pattern, may be arranged in any arrangement, and may have any number. Note that it is preferable that at least one or more reference dots for representing dot patterns are arranged. When one reference dot is provided, it is necessary that a straight line (direction) including the reference dot is defined. This straight line (direction) may be calculated based on a direction of the dot pattern.

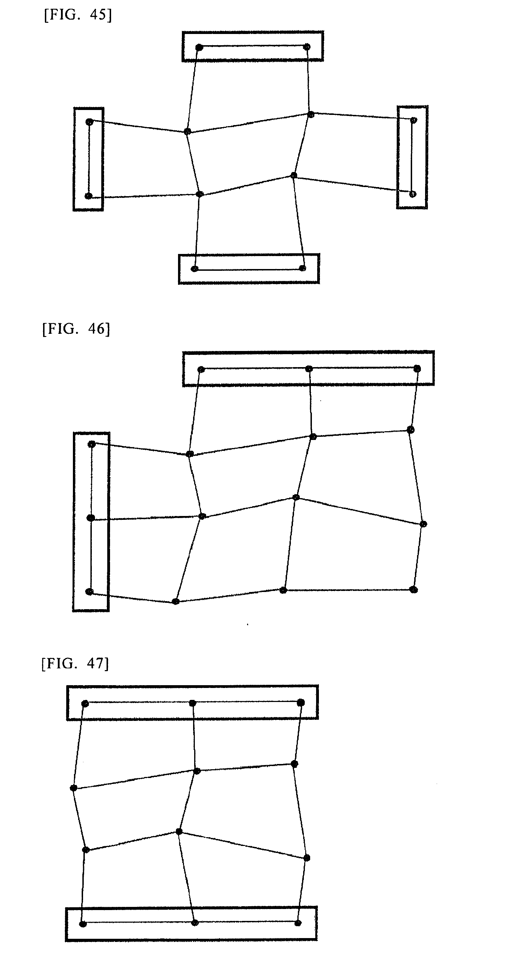

FIGS. 45 to 50 illustrate a dot pattern where a dot pattern is arranged in two or more rows and two or more columns, and both rows and columns are constituted while information dots arranged adjacently are shared in each row and each column, and reference dots are arranged in the end part. FIG. 45 illustrates a dot pattern where starting-point information dots and end-point information dots arranged in rows of the upper and lower ends and columns of the right and left ends have become reference dots arranged in a prescribed interval on a virtual reference line orthogonal to rows or columns.

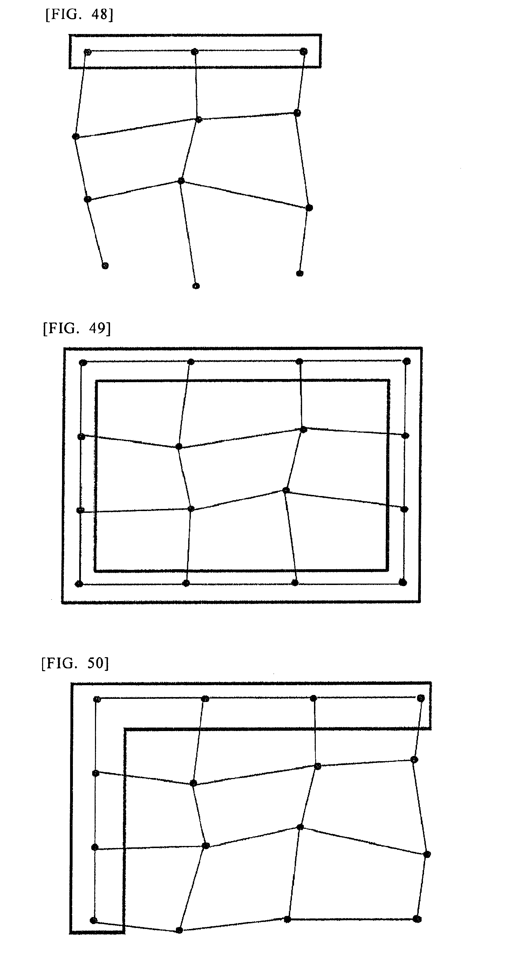

FIG. 46 illustrates a dot pattern where starting-point information dots (or end-point information dots) arranged in the row of the upper end and the column of the left end have become reference dots arranged in a prescribed interval on a virtual reference line orthogonal to rows or columns. Note that the reference dot may be arranged even in a lower end row and right end column. That is, either row of the upper or lower end part and either column of the left or right end part may be made to be the row and column where reference dots are arranged. As for information dots except the reference dots, codes are encoded based on a value of a distance of an interval between information dots arranged adjacently in a row direction and column direction. In addition, as illustrated in FIG. 47, starting-point information dots and end-point information dots of rows of the upper and lower ends, may be made to be rows where reference dots are arranged. In addition, as illustrated in FIG. 48, starting-point information dots (or end-point information dots) of the upper end row may be made to be the row where reference dots are arranged.

FIG. 49 illustrates a dot pattern where in the dot pattern of FIG. 45, reference dots are further arranged at a position where virtual reference lines orthogonal to rows or columns intersect.

FIG. 50 illustrates a dot pattern where in the dot pattern of FIG. 46, a reference dot is further arranged at a position where virtual reference lines orthogonal to rows or columns intersect.

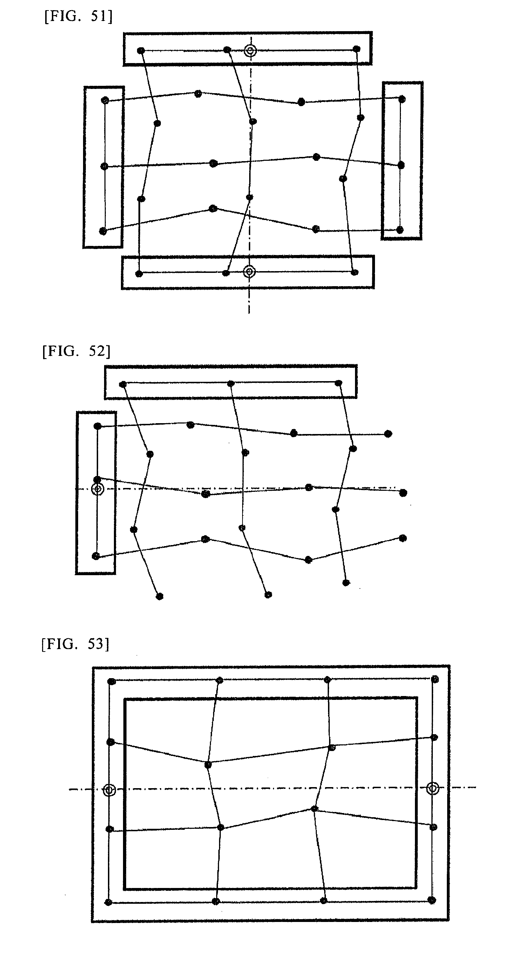

FIGS. 51 to 54 illustrate definition of a direction of a dot pattern.

Even in a case of the same dot pattern, depending on whether which direction is assumed to be a normal direction, that is, whether which direction is assumed to be a reference for recognizing a dot pattern, an analysis result by a processor and a result of executed processing come to be different. Therefore, in order to make it recognized that on the basis of which direction the dot pattern is formed, it is preferred to define a direction of a dot pattern. In particular, although described later, when two or more dot patterns are arranged while connected or coupled, it becomes very important to recognize the direction of the dot pattern.

FIG. 51 is a modification example of the dot pattern of FIG. 42, and illustrates a dot pattern where with respect to the center between reference dots of both ends arranged on a virtual reference line (dashed dotted line), the direction of the dot pattern has been defined while the prescribed interval is determined so that reference dots on this virtual reference line (dashed dotted line) may be laterally asymmetrical.

When an arrangement of reference dots is vertically and laterally symmetrical, it becomes difficult to recognize the direction of the dot pattern. Therefore, by making the arrangement laterally (or vertically) asymmetrical, the direction of the dot pattern is made to be able to be discriminated.

FIG. 52 is a modification example of the dot pattern of FIG. 41, and illustrates a dot pattern where with respect to the center between reference dots of both ends arranged on a virtual reference line (dashed dotted line), the direction of the dot pattern has been defined while the prescribed interval is determined so that reference dots on this virtual reference line (dashed dotted line) may be laterally asymmetrical.

In this dot pattern, reference dots are arranged only in the one side, and however, when two or more of the dot patterns are arranged in a prescribed interval, reference dots come to be arranged vertically and laterally, and if reference dots are vertically and laterally symmetrical in appearance, it becomes difficult to recognize the direction of the dot pattern. Therefore, by making the arrangement vertically (or laterally) asymmetrical, the direction of the dot pattern has been enabled to be discriminated.

FIG. 53 illustrates an example in which the arrangement of reference dots of the dot pattern of FIG. 49 has been changed and illustrates a dot pattern where with respect to a dashed dotted line intersecting at a right angle at the center between reference dots of both ends arranged on the virtual reference line in a vertical direction, the direction of the dot pattern has been defined while the prescribed interval is determined so that reference dots on this virtual reference line may be vertically asymmetrical.

If reference dots are vertically and laterally symmetrical, it becomes difficult to recognize the direction of the dot pattern. Therefore, by making the arrangement vertically (or laterally) asymmetrical, the direction of the dot pattern is made to be able to be discriminated.

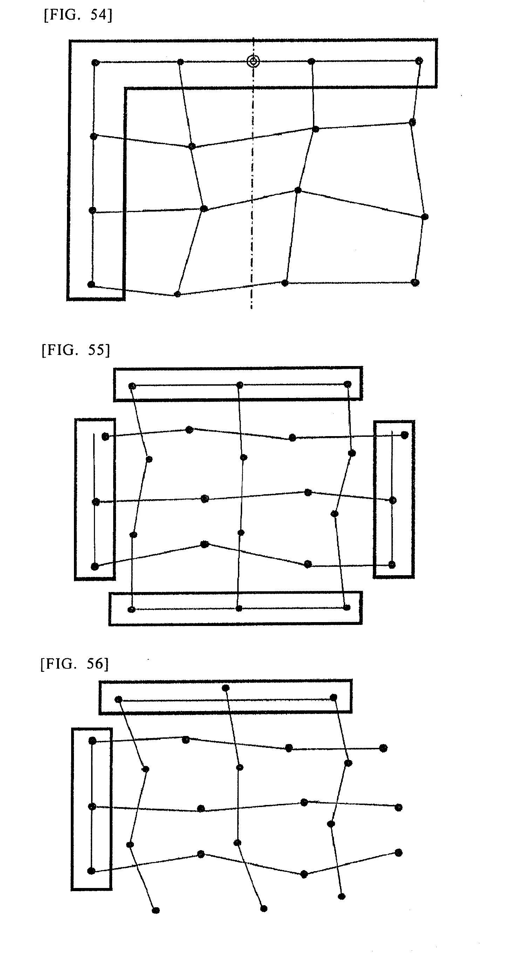

FIG. 54 illustrates an example in which the arrangement of reference dots of the dot pattern of FIG. 50 has been changed and illustrates a dot pattern where with respect to the center between reference dots of both ends arranged on a virtual reference line (dashed dotted line), the direction of the dot pattern has been defined while the prescribed interval is determined so that reference dots on this virtual reference line (dashed dotted line) may be laterally asymmetrical.

In this dot pattern, reference dots are arranged only in the one side, and however, when two or more of the dot patterns are arranged in a prescribed interval, reference dots come to be arranged vertically and laterally, and if reference dots are vertically and laterally symmetrical in appearance, it becomes difficult to recognize the direction of the dot pattern. Therefore, by making the arrangement laterally (or vertically) asymmetrical, the direction of the dot pattern is made to be able to be discriminated.

FIG. 55 illustrates an example in which the arrangement of reference dots of the dot pattern of FIG. 42 has been changed and illustrates a dot pattern where a reference dot arranged on the virtual reference line is arranged while shifted in a prescribed direction, and the direction of the dot pattern has been defined.

By the shift of the reference dot, the direction of the dot pattern can be defined. In FIG. 55, since reference dots arranged on the top in the right and left side are shifted in a right direction, the direction of the dot pattern can be recognized. Note that, when the reference dot is arranged while shifted in a right direction, it is a design matter whether a direction of the dot pattern is made to be vertical or lateral.

FIG. 56 illustrates an example in which the arrangement of a reference dot of the dot pattern of FIG. 41 has been changed and illustrates a dot pattern where a reference dot arranged on the virtual reference line is arranged while shifted in a prescribed direction, and the direction of the dot pattern has been defined.

In this dot pattern, reference dots are arranged only in the one side, and however, when two or more of the dot patterns are arranged in a prescribed interval, reference dots come to be arranged vertically and laterally, and if reference dots are vertically and laterally symmetrical in appearance, it becomes difficult to recognize the direction of the dot pattern. Then, by the shift of the reference dot, the direction of the dot pattern can be defined.

In FIG. 56, since a reference dot arranged in the center of the upper part is shifted in an upper direction, the direction of the dot pattern can be recognized. Note that, when the reference dot is arranged while shifted in a upper direction, it is a design matter whether a direction of the dot pattern is made to be vertical or lateral.

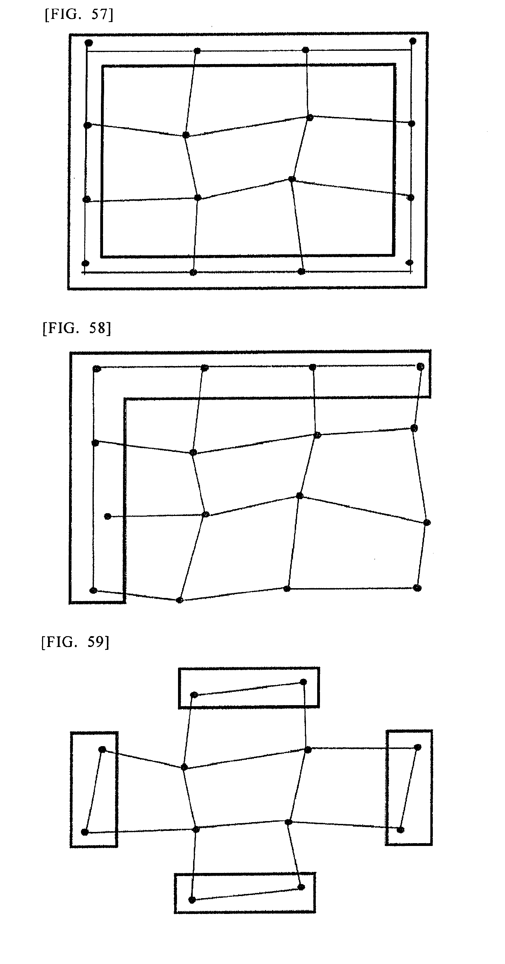

FIG. 57 illustrates an example in which the arrangement of a reference dot of the dot pattern of FIG. 49 has been changed and illustrates a dot pattern where reference dots arranged on the virtual reference line are arranged while shifted in a prescribed direction, and the direction of the dot pattern has been defined.

By the shift of the reference dot, the direction of the dot pattern can be defined. In FIG. 57, since reference dots arranged at the four corners of the dot pattern are shifted in an upper direction, the direction of the dot pattern can be recognized. Note that, when reference dots are arranged while shifted in an upper direction, it is a design matter whether a direction of the dot pattern is made to be vertical or lateral.

FIG. 58 illustrates an example in which the arrangement of a reference dot of the dot pattern of FIG. 50 has been changed and illustrates a dot pattern where a reference dot arranged on the virtual reference line is arranged while shifted in a prescribed direction, and the direction of the dot pattern has been defined.

In this dot pattern, reference dots are arranged only in the one side, and however, when two or more of the dot patterns are arranged in a prescribed interval, reference dots come to be arranged vertically and laterally, and if reference dots are vertically and laterally symmetrical in appearance, it becomes difficult to recognize the direction of the dot pattern. Then, by the shift of the reference dot, the direction of the dot pattern can be defined. In FIG. 58, since a reference dot arranged at the third position from the top in the left end is shifted in a right direction, it can be recognized that the dot pattern is facing right. Note that, when the reference dot is arranged while shifted in a right direction, it is a design matter whether a direction of the dot pattern is made to be vertical or lateral.

FIG. 59 illustrates a dot pattern where starting-point information dots and end-point information dots arranged in rows of the upper and lower ends and columns of the right and left ends have become reference dots arranged in a prescribed shape in the direction orthogonal to the row or column. Note that, as for information dots except the reference dots, codes are encoded based on a value of a distance of interval between information dots arranged adjacently in a row direction and column direction, and the direction of the dot pattern is defined by an arrangement shape of the reference dots.

Here, the direction of the dot pattern is preferred to be defined by the prescribed shape being expressed by an arrangement of all or a part of reference dots. Although this shape may be any type of shape if designed as a pattern in advance, when the shape shows non-axial symmetry which does not correspond to the shape before rotation even if rotated by 180 degrees with both ends of the reference dot as a center, the direction of the dot pattern can be defined from the shape itself. However, when two or more dot patterns are arranged while coupled, preferable is an arrangement such that an arrangement shape of the reference dot can be distinguished from the arrangement shape having a belt-like shape of the information dot.

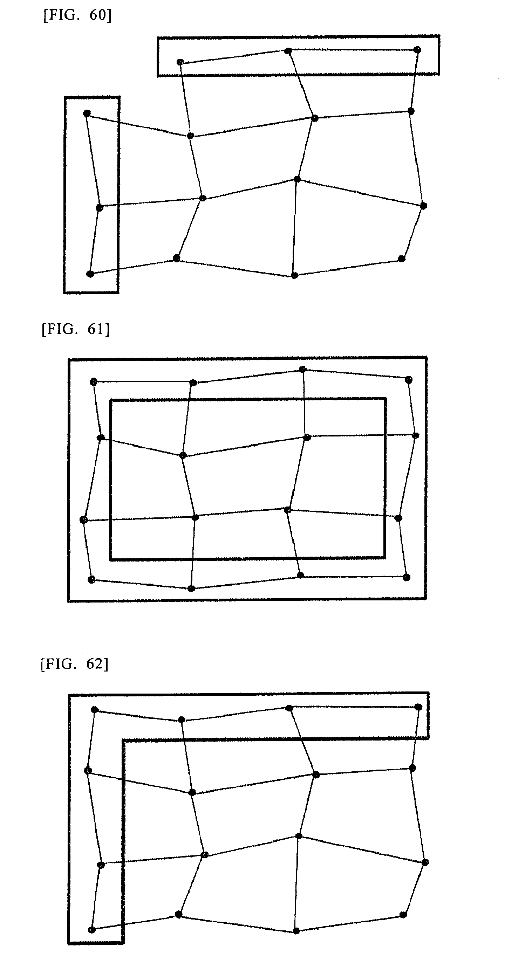

FIG. 60 illustrates a dot pattern where starting-point information dots and end-point information dots arranged in the upper end row and left end column have become reference dots arranged in prescribed shape in a direction orthogonal to the row or column. Note that the reference dot may be arranged even in a lower end row and right end column. That is, either row of the upper or lower end part and either column of the left or right end part may be made to be the row and column where reference dots are arranged. As for information dots except the reference dots, codes are encoded based on a value of a distance of an interval between information dots arranged adjacently in a row direction and column direction, and the direction of the dot pattern is defined by the arrangement shape of the reference dots.

In this dot pattern, reference dots are arranged only in the one side, and however, when two or more of the dot patterns are arranged in a prescribed interval, reference dots come to be arranged vertically and laterally, and if reference dots are vertically and laterally symmetrical in appearance, it becomes difficult to recognize the direction of the dot pattern. Then, the direction of the dot pattern is preferred to be defined by the prescribed shape being expressed by an arrangement of all or a part of reference dots. Although this shape may be any type of shape if designed as a pattern in advance, when the shape shows non-axial symmetry which does not correspond to the shape before rotation even if rotated by 180 degrees with both ends of the reference dot as a center, the direction of the dot pattern can be defined from the shape itself. However, when two or more dot patterns are arranged while coupled, preferable is an arrangement such that an arrangement shape of the reference dot can be distinguished from the arrangement shape having a belt-like shape of the information dot.

FIG. 61 illustrates a dot pattern where in the dot pattern of FIG. 59, reference dots are arranged in a shared position outside the position arranged in the prescribed shape in the direction orthogonal to the row or column.

In this way, even in a case where the reference dots are arranged, not on a straight line, but with a prescribed shape, it is possible to arrange a reference dot furthermore at a position where a row direction and column direction in which reference dots are arranged intersect. Thereby, when two or more dot patterns are arranged, dots are arranged uniformly without dot dropouts, and a visual effect can be improved.

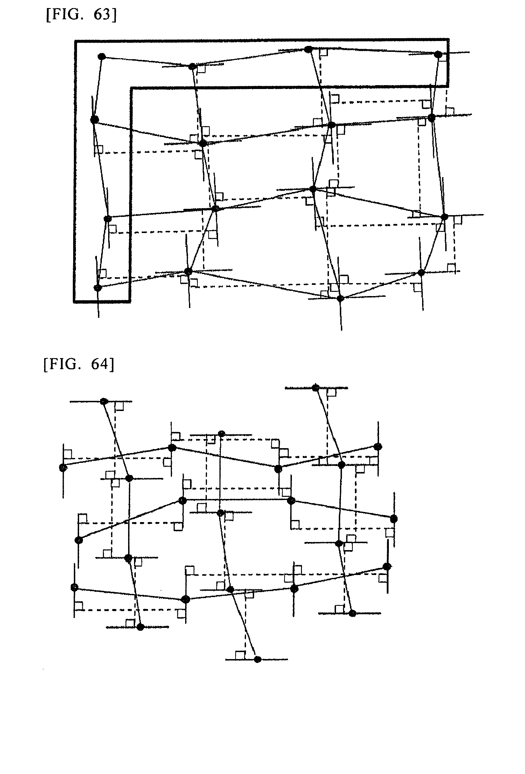

FIGS. 62 and 63 illustrate a dot pattern where in the dot pattern of FIG. 62, reference dots are arranged in a shared position outside the position arranged in the prescribed shape in the direction orthogonal to the row or column.

In this way, even in a case where the reference dots are arranged, not on a straight line, but with a prescribed shape, it is possible to arrange a reference dot furthermore at a position where a row direction and column direction in which reference dots are arranged intersect. Thereby, when two or more dot patterns are arranged while coupled, dots are arranged uniformly without dot dropouts, and a visual effect can be improved.

Note that FIG. 63 illustrates a case where codes are encoded based on a distance of a prescribed direction interval held by information dots.

With respect to each row and each column used for encoding of codes, although each row and each column calculate a distance of a prescribed direction interval in a prescribed direction which each starting-point information dot has, the prescribed direction in a row direction and a column direction is each constant in FIG. 63.

FIGS. 64 to 67 illustrate a way of defining a prescribed direction which the starting-point information dot has. In these figures, a prescribed direction which an information dot arranged adjacently in the row direction has is assumed to be a vertical direction, and a prescribed direction which an information dot arranged adjacently in the column direction has is assumed to be a horizontal direction. Then, with respect to the row direction, a distance between vertical lines of the adjacent information dots is calculated. With respect to the column direction, a distance between horizontal lines of the adjacent information dots is calculated.

The vertical line and horizontal line are easy to be configured, and analyzed by a processor. Therefore, with respect to information dots arranged adjacently in the row direction, the vertical direction is assumed to be the prescribed direction, and with respect to information dots arranged adjacently in the column direction, the horizontal direction is assumed to be the prescribed direction, and thereby, it becomes possible for the processor to calculate easily the distance of a prescribed direction interval.

The dot pattern illustrated in FIG. 64 is the dot pattern illustrated in FIG. 37.

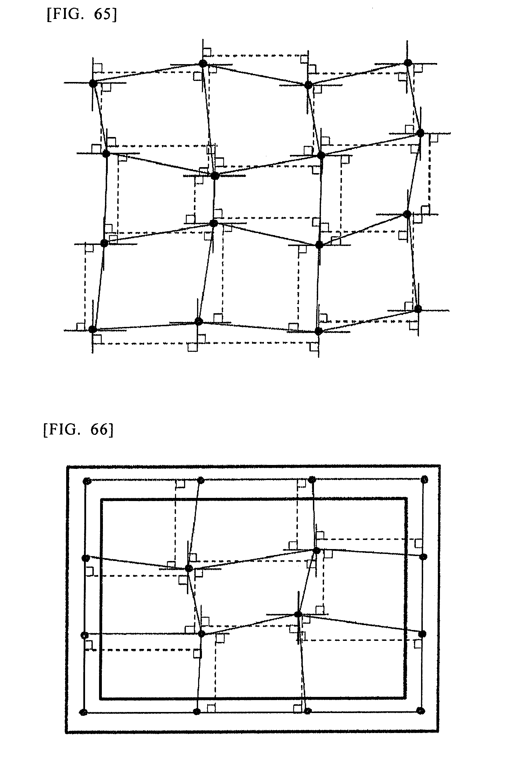

The dot pattern illustrated in FIG. 65 is the dot pattern illustrated in FIG. 39.

The dot pattern illustrated in FIG. 66 is the dot pattern illustrated in FIG. 49.

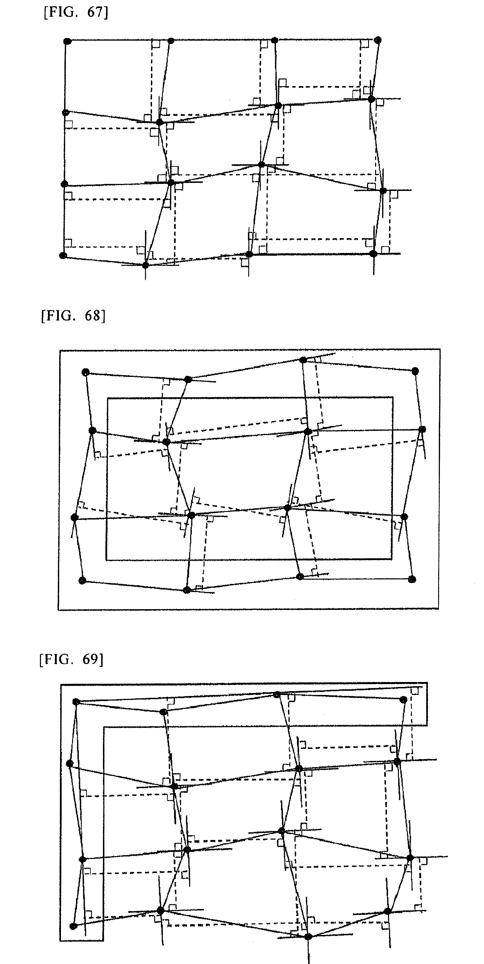

The dot pattern illustrated in FIG. 67 is the dot pattern illustrated in FIG. 50.

FIGS. 68 and 69 illustrate a way of defining of a prescribed direction which the information dot has.

In the present example, the prescribed direction held by information dots arranged adjacently in a row direction or in a column direction is assumed to be a direction of a line segment connecting two reference dots.

The dot pattern illustrated in FIG. 68 is the dot pattern illustrated in FIG. 61, and is constituted by four rows x four columns. The prescribed direction held by information dots arranged adjacently in the second row direction is provided in a direction orthogonal to a line segment connecting the first and second reference dots from the top in each of the right end and the left end. The prescribed direction held by information dots arranged adjacently in the third row direction is provided in a direction orthogonal to a line segment connecting the second and third reference dots from the top in each of the right end and the left end. The prescribed direction held by information dots arranged adjacently in the second column direction is provided in a direction orthogonal to a line segment connecting the first and second reference dots from the left in each of the upper end and the lower end. The prescribed direction held by information dots arranged adjacently in the third column direction is provided in a direction orthogonal to a line segment connecting the second and third reference dots from the left in each of the upper end and the lower end.

The dot pattern illustrated in FIG. 69 is the dot pattern illustrated in FIG. 62, and is constituted by four rows x four columns. The prescribed direction held by information dots arranged adjacently in the row direction is provided in a direction orthogonal to a line segment connecting the first and third reference dots from the top in the left end. The prescribed direction held by information dots arranged adjacently in the column direction is provided in a direction orthogonal to a line segment connecting the first and third reference dots from the left in the upper end.

In this way, the reference dots to be connected may not be adjacent reference dots mutually.

Note that in the example mentioned above, information may be defined also for the reference dot. That is, numerical values are defined also for at least any of lengths ranking permutations, lengths ranking combinations, ratio permutations, ratio combinations, or absolute values, absolute value permutations, absolute value combinations with respect to a distance between reference dots arranged adjacently or a distance value of a prescribed direction interval. Thereby, while the boundary section of connected dot patterns is also specified clearly, it becomes possible to encode much of information into the dot pattern.

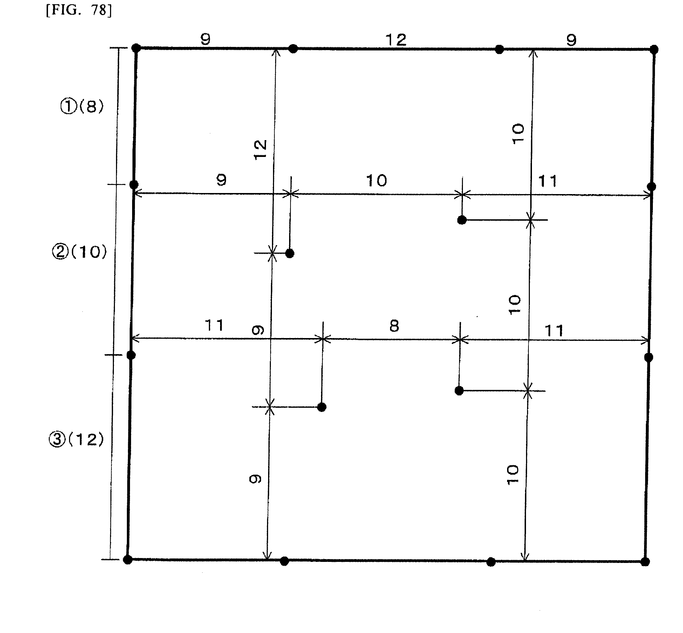

In addition, according to a dot pattern of FIG. 78, the reference dots of the left end have a permutation of (8), (10) and (12) from the top with respect to distance values. The permutation is made not to be used for permutations of distances between other dots, and thereby, it is possible to define the direction and boundary of the dot pattern based on the reference dots of the left end.

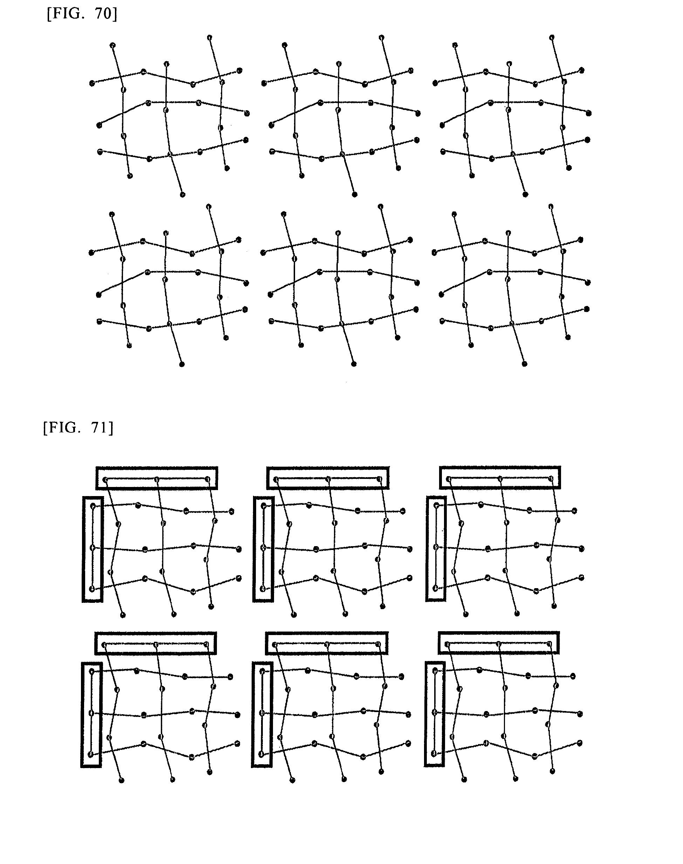

Dot patterns illustrated in FIGS. 37, 41 and 58 described above are usually connected in a prescribed interval in a vertical or lateral direction as illustrated FIGS. 70, 71 and 72.

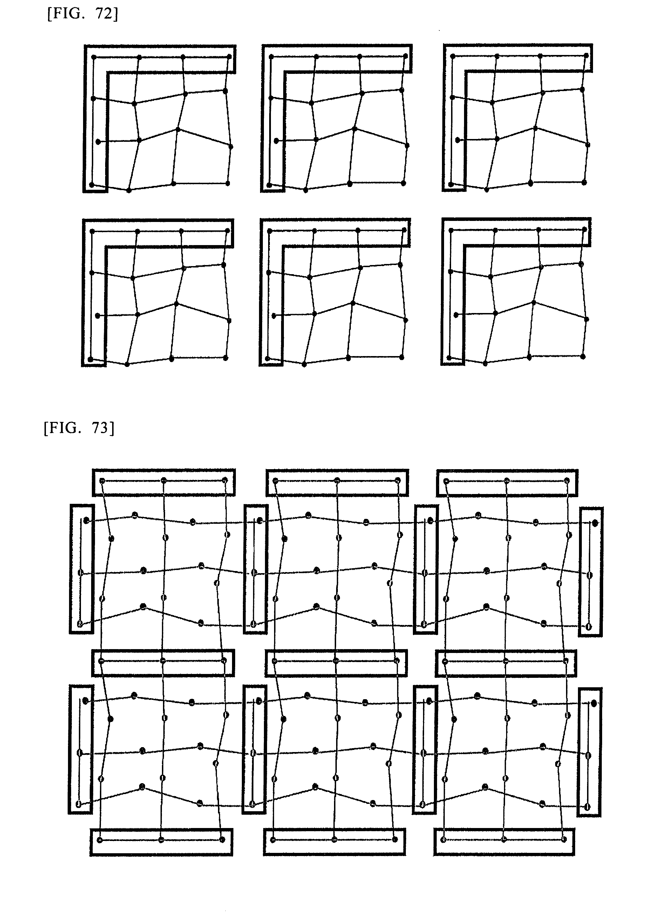

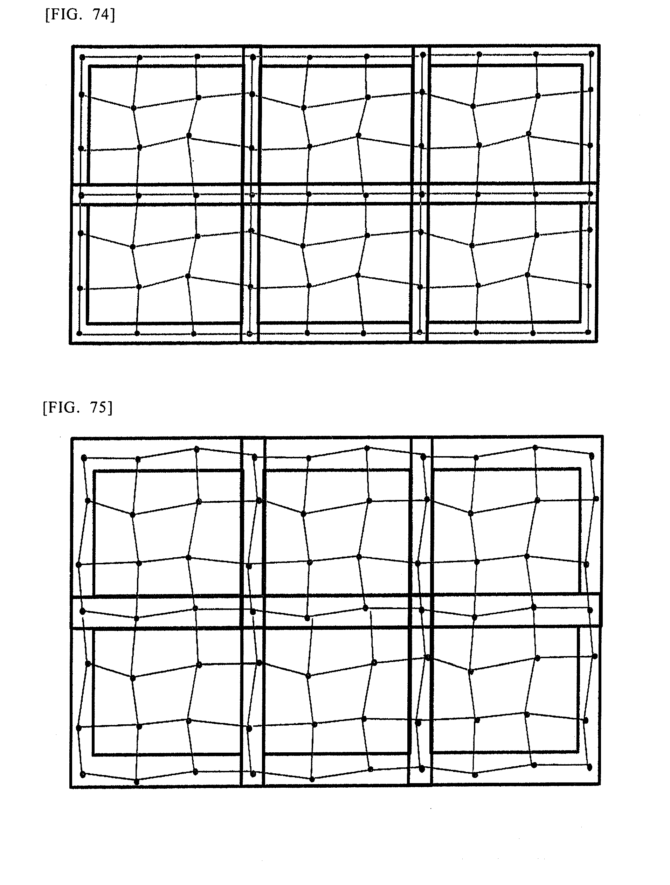

In addition, as for dot patterns illustrated in FIGS. 55, 53 and 61 that are dot patterns having reference dots in both ends, reference dots arranged in both ends of two or more of rows and/or columns as illustrated in FIGS. 73, 74 and 75 are arranged in the same shape mutually, and reference dots arranged in the same shape mutually are coupled laterally and vertically while overlapped.

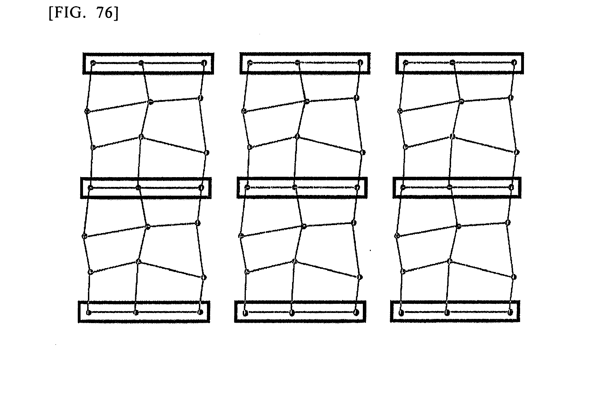

In addition, as for the dot pattern illustrated in FIG. 47, reference dots arranged in both ends of two or more of the rows and/or columns are arranged in the same shape mutually as illustrated in FIG. 76, and two or more reference dots arranged in the same shape mutually are coupled in a lateral or vertical direction while overlapped, and connecting and arranging may be made to be carried out in a prescribed interval in the other direction.

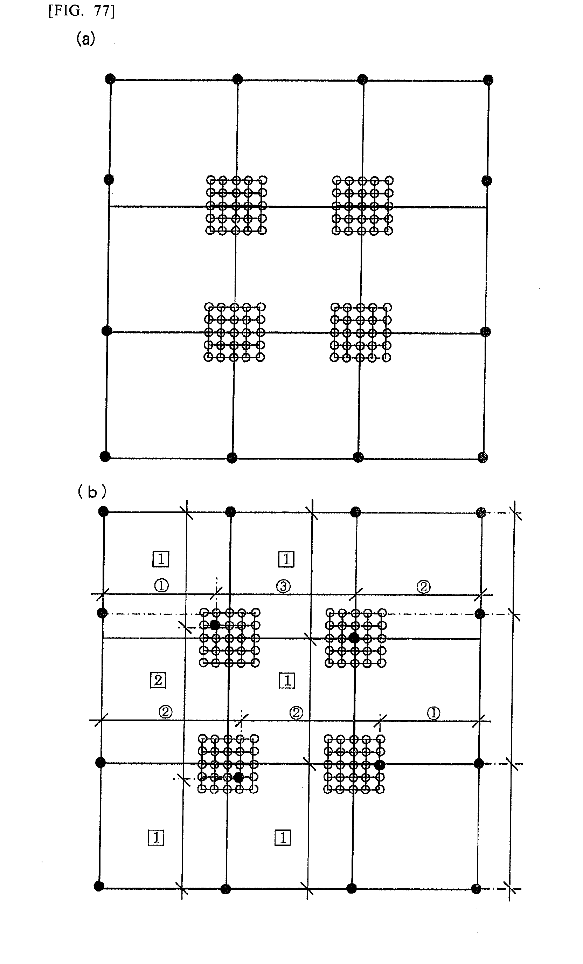

Here, a generation method of a dot pattern where the reference dot is arranged in both ends of the row and column, and encoding of codes based on a distance of a prescribed direction of an interval between information dots will be described using FIG. 77. The target dot pattern is constituted by four rows x four columns, and while reference dots of the second row among vertical reference dots arranged at equal intervals in the left and right columns are made to be shifted in an upper direction, the direction of the dot pattern is determined. Horizontal reference dots arranged in the upper and lower rows are arranged at equal intervals. Reference dots of the second and third column are made to be connected vertically, and the connected lines are assumed to be a first and second virtual vertical lines, and reference dots of the second column before shifted in the left and right columns and reference dots of the third column are made to be connected laterally, and the connected lines are assumed to be a first and second virtual horizontal lines.

When an interval between reference dots is assumed to be 10, centering on four points where the first and second virtual vertical lines and the first and second virtual horizontal lines intersect, and virtual points of $5 \times 5$ for arranging information dots are arranged with an arrangement interval as vertically and horizontally 1 as illustrated in FIG. 77 (a).

As for combinations of distances in a prescribed direction between three information dots, when configured so that the total may be 30, there are four with respect to the lengths: (9,10,11), (9,9,12), (8,11,11) and (10,10,10). That is, the combinations in ascending order of lengths ranking are as follow: (No. (1), No. (2), No. (3)), (No. (1), No. (1), No. (2)), (No. (1), No. (2), No. (2)), and (No. (1), No. (1), No. (1)). When actually arranged, an arrangement order of a distance in a prescribed direction is based on codes encoded by permutations and combinations. As the result, since 13 ways of codes can be encoded by one row or column, $13^4 = 28,561$ ways of codes can be defined by all the rows and columns. Here, a distance increment in a different prescribed direction is configured in an ascending order from the shortest distance while having differences no less than 10%. Considering a deviation in printing, a distortion of a printing medium, a camera inclination (30 to 40 degrees) at the time of dot pattern reading, this has been configured so that ranking of a distance of an interval between information dots may be determined accurately on the premise that an error of a value of a distance of an interval between information dots is approximately 5%. Thereby, when the error is less than 7.5% approximately, the distance is determined to be the same distance, and can be recognized to be at the same rank. However, in a camera inclination which most influences deformation of an arrangement position of dots, the error mentioned above changes depending on a camera resolution or lens performance, and therefore, it is necessary to configure the allowances after sufficient operation tests based on operating conditions have been carried out.

Here, as for an arrangement of vertical reference dots for specifying a direction of a dot pattern, reference dots of the second row are made to be shifted in an upper direction by 2. As the result, (8, 12, 10) from the top is obtained, and one which has a sequence having the same values as distances in a prescribed direction of an information dot does not exist, and it can be specified that this column (8, 12, 10) is the vertical reference dots. Thereby, since a region and direction of the dot pattern are specified, also with respect to the horizontal reference dots, codes of the same amount as permutations and combinations of distances in a prescribed direction between other three information dots can be configured. As the result, $13^5=371,293$ ways of codes can be defined by all the rows, columns and horizontal reference dots.

FIG. 77 (b) illustrates an example where information dots are arranged actually. First, when a distance in a prescribed direction of an interval between information dots in a row direction is determined, it is determined that an information dot is arranged at any of five virtual points each in a vertical direction in the virtual points of $5\times5$. Next, when a distance in a prescribed direction of an interval between information dots in a column direction is determined, an information dot will be arranged at any of previous five virtual points, and arrangements of all the information dots are determined uniquely when codes are encoded.

Note that, although a distance between reference dots has been assumed to be 10, any numerical value may be applicable, and a shift of the reference dot and an arrangement of information dots may be configured by the same ratio on the basis of numerical values between reference dots. When a current printing technique, accuracy and performance of a camera and a photographing region are taken into consideration, a printing accuracy may be 600 DPI, and a distance between reference dots may be 10 pixels. Note that a size of a dot may be 1 pixel or 2x2 pixels. Although 1 pixel is acceptable considering a visual effect in a case of dot printing, when there are large dispersions in printing, a recognition rate can be avoided from being reduced while a size of a dot is made to be 2x2 pixels.

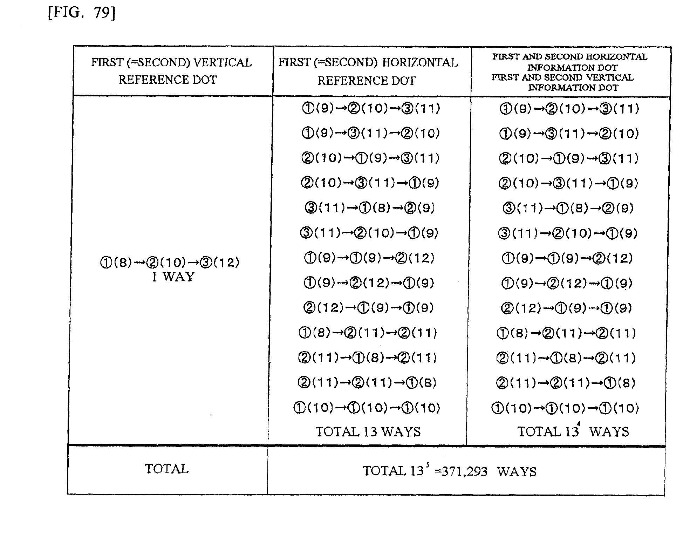

FIGS. 78 and 79 illustrate the number of code allocations which can be expressed by the present invention.

The reference dots in the left end have a permutation of (8), (10), (12) from the top with respect to a distance value. This permutation is not made to be used for permutations with respect to distances between other dots, and thereby, a direction and boundary of the dot pattern can be defined by the reference dots in the left end.

As illustrated in FIG. 79, when codes are expressed only by information dots, $13^4$, 18561 ways of the number of codes can be expressed, and when cases where information is defined by reference dots is included, $13^5$, 371293 ways of the number of codes can be expressed.

When the number of codes which could be expressed by a dot pattern of a previously existing technology will be described on the same conditions as FIG. 78, in a case where the number of information dots is four, $8^4$, 4096 ways of the number of codes exist when codes are expressed by shifts in eight directions from a reference point, and when codes are expressed by shifts in eight directions and two ways of long and short distances, $16^4$, 65536 ways of the number of codes have existed, and therefore, the number of codes which can be expressed by the same number of dots has been remarkably improved according to the present invention.

<Third embodiment>

Although the dot pattern made up of two or more rows and two or more columns has been described as the dot pattern of the second embodiment, it is possible that a three-dimensional dot pattern having a three-dimensional arrangement is generated while two or more dots are arranged also in a depth direction in addition to the row direction and column direction as illustrated in FIG. 80. In FIG. 80, 32 reference dots are arranged along eight edges of a cube, and 32 information dots are arranged inside. When codes are encoded by the same method as FIGS. 77 to 79, the number of codes will be the maximum of 1372 ways.

As for codes in dots arranged in a depth direction, information can be encoded based on a value of a distance of an interval between information dots arranged adjacently in a depth direction, and in addition to this, it is possible to carry out encoding by the same method as the method already described in the second embodiment. As for this three-dimensional dot pattern, dots which can be recognized physically by a prescribed method such as recognizing electrically or optically, and magnetically are arranged in the inside of a solid substance (with contents packed) or a substance with a plane member stacked. As a matter of course, dots may be stored with elements integrated. In addition, coordinate values (XYZ value) of dots constituting a three-dimensional dot pattern are stored as digital information, and decoding thereof can be carried out. These are excellent in security since code information is not converted directly into a numerical value.

<Notes>

Note that, as the embodiment of the present invention, the first embodiment (dot pattern constituted by one row (or column)), the second embodiment (dot pattern constituted by two or more rows and two or more columns), the third embodiment (dot pattern constituted by two or more rows, two or more columns, and two or more depths) have been each described, and however, the categories of these embodiments are not ones that categorize Claims claimed by Applicant in the present application.

That is, an implementation of the dot pattern of the second embodiment may include a total implementation of the first embodiment, and an implementation of the dot pattern of the third embodiment may include a total implementation of the first and second embodiments.

<Formation of dot pattern>

A dot pattern described in the present invention is generated by a program as image data on a computer, and is printed out onto printing media such as paper, and thereby, is formed on a printing surface. However, as for a method to form a dot pattern on a product, not only a method using a printer, but all known output devices may be used. In addition, a dot pattern may be displayed on a display device.

<Reading device of dot pattern>

As for a dot pattern, encoded codes can be decoded by using a reading device. A reading device of a dot pattern is at least provided with an imaging device for imaging a dot pattern, a processing device, and a storage device.

Note that the reading device means both of a case where the imaging device, the processing device and the storage device are provided in one casing, and a case where the imaging device, the processing device and the storage device are provided in two or more casings.

In addition, the imaging device includes one which has employed a method to carry out reading with the reading device contacted to a medium where a dot pattern is printed, and one which has employed a method to carry out reading with the reading device in a state apart from a medium.

In one which has employed a method to carry out reading with the reading device contacted to a medium where a dot pattern is printed, various scanners etc. are all included in addition to so-called an electronic pencil or one which is a pen type referred to as a voice pen, one which is provided with an imaging device on a bottom face of a figure, and one which carries out reading while a medium where a dot pattern is printed is placed on a card reader.

In one which has employed a method to carry out reading with the reading device in a state apart from a medium, a mobile phone, a smart phone, one which carries out imaging using a camera built in a tablet type device, and one which carries out imaging using a usual camera are all included.

In the storage device, a program to be executed by a processing device is stored, and in this program, processing to detect a dot pattern from image data imaged by the imaging device and processing to decode codes encoded by a dot pattern are included.

Decoding of codes is carried out based on the described encoding algorithm of a dot pattern.

The decoded code can be used for the corresponding processing. With respect to what kind of processing is performed, usage may be possible for all kinds of processing.

For example, information corresponding to codes may be read and outputted from the storage device. Information corresponding to codes may be searched for from Internet. When an XY coordinate value is defined on codes, a medium where a dot pattern has been formed can be use for a mouse pad, a tablet, a touch panel and a map etc.

<First example of generation method of dot pattern and code encoding>

FIG. 78 is an example where a dot pattern has been arranged actually in the example illustrated in FIG. 77 mentioned above, and FIG. 79 illustrates the number of code allocations which can be expressed by the present invention.

The reference dots of the left column have a permutation of (8), (10) and (12) from the top with respect to a distance value. This permutation is made not to be used for permutations of distances between other dots, and thereby, can be distinguished from others, and it is possible to define a direction and boundary of the dot pattern based on the reference dots of the left column.

As illustrated in FIG. 79, when codes are expressed only by information dots, $13^4$, 18561 ways of the number of codes can be expressed, and when cases where information is defined by reference dots are included, $13^5$, 371293 ways of the number of codes can be expressed.

When the number of codes which could be expressed by a dot pattern of a previously existing technology is verified based on the same number of dots as FIG. 78, in a case where the number of information dots is four, when codes are expressed by shifts in four directions or eight directions from a reference point, $4^4$=256 ways or $8^4$, 4096 ways of the number of codes exist. In addition, when codes are expressed by shifts in eight directions and two ways of long and short distances, $16^4$, 65536 ways of the number of codes have existed, and therefore, the number of codes which can be expressed in the same few number of dots has been remarkably improved according to the present invention.

Here, although an example of a dot pattern constituted by four rows x four columns has been illustrated, even when rows and columns are increased, a dot pattern can be arranged by the same generation method. Although not illustrated, in a dot pattern constituted by, e.g. five rows xfive column, when 7x7 virtual points where dots are arranged are configured at nine places, permutations and combinations of distance lengths in a prescribed direction between all information dots are configured uniquely in the same way as FIG. 77, and codes can be encoded.

<Second example of generation method of dot pattern and code encoding>

As mentioned above, in the generation method of a dot pattern where codes are encoded by permutations and combinations of distances lengths on the basis of a distance in a prescribed direction between reference dots, a method where encoding can be carried out uniquely when dots are arranged at prescribed positions has been described, and however, there are at least one or more candidates for a position where a dot is arranged when the following conditions are satisfied, and a dot may be arranged by any kind of algorithm. This means that the same code can be encoded even in a case of a different arrangement of dots, and it can be that the decryption of codes is difficult, and security is excellent.

(1) Distances in a prescribed direction of an interval between information dots are assumed to be $L_1$, $L_2$ and $L_3$ in an ascending order (when any two distances are the same distance, $L_1$, $L_2$, when three distances are the same, only $L_1$).

(2) Second long distances are extended by more than $\alpha$ ($\alpha > 1$) times on the basis of this distance. Note that $\alpha$ is not needed to be all the same in each interval between information dots, and may be made to be changed for every interval between information dots.

$$\alpha L_1 < L_2, \ \alpha L_2 < L_3$$

(3) When imaging is carried out in a state where a camera at the time of dot pattern reading is inclined by approximately 30 to 40 degrees, the intervals between four information dots arranged at equal intervals on a straight line are deformed, and made short depending on a position. In addition, as for the minimum value due to errors on the basis of the maximum value of the intervals of information dots arranged on the straight line including also an influence of a deviation in printing and a distortion of a printing medium, a distance in a prescribed direction is assumed to be shortened by the maximum $\beta$ times ($1/\beta < \alpha$, $\beta < 1$), approximately.

$$L_1 < \beta L_2, \ L_2 < \beta L_3$$

That is, it is necessary for $L_1$, $L_2$ and $L_3$ to be configured so as to be determined to be $L_1 < \beta L_2$ and $L_2 < \beta L_3$ still even if distortions are taken into consideration.
In addition, when a distance of an interval between information dots is the same, it is necessary to carry out configuring so as to be determined to be the same still even if distortions are taken into consideration.
For example, when three distances are each

$L_1$, $L_1$ and $L_2$, it is configured for $L_1$, $L_1$, and $L_2$ to be determined to be $L_1 = \beta L_1$ and $L_1 < \beta L_2$.
When all of three distances are the same L1, it is configured for $L_1$, $L_1$, and $L_2$ to be determined to be $L_1 = \beta L_1$.

(4) In an ascending order of a distance in a prescribed direction of an interval between information dots, a threshold value $\gamma$ ($1/\beta < \gamma < \alpha$, $\gamma > 1$) for performing determination of an interval between information dots having a second short distance is configured. Note that this threshold value $\gamma$ is used in a case of decoding of codes.

$$\gamma L_1 < L_2 < \gamma \alpha L_1, \ \gamma L_2 < L_3 < \gamma \alpha L_2$$

As for determination that the shortest $L_1$, of a distance in a prescribed direction of an interval between information dots and $L_1$' generated as the same distance are the same distance, or second short distance $L_2$ and $L_2$' generated as the same distance are the same distance,
when $L_1$, and $L_1$' are the same distance: $\gamma L_1 > L_1$', and when $L_2$ and L2' are the same distance : $\gamma L_1 < L_2 < \gamma \alpha L_1$ and $\gamma L_1 < L_2' < \gamma \alpha L_1$.
(5) Here, compared with the multiplying factor $\beta$ based on errors due to a dot arrangement deformation, a deviation in printing and a distortion of a printing medium of photographed images in a state where a camera is inclined, in determination of the multiplying factor $\alpha$ from the shorter one at the time of determining a distance in a prescribed direction of an interval between information dots, it is preferred that a safety factor (design increment rate to error increment rate) is made to be 2 times approximately while a sufficient margin is taken.
That is,

$$2(1/\beta - 1) = \alpha - 1 \ \text{hence} \ \alpha = 2/\beta - 1$$

will be given.
The safety factor mentioned above is to be determined depending on to what extent a misidentification rate is to be suppressed including also how much the camera is inclined, and how much a deviation in printing and a distortion of a printing medium are generated, and while these are fully investigated minutely, the safety factor may be determined optionally.
(6) It is preferred for the threshold value $\gamma$ in (5) to take a value near an intermediate value between $1/\beta$ and $\alpha$.

That is,

$$\gamma=1.5/\beta-0.5$$

may be applicable. Note that this threshold value $\gamma$ is used in a case of decoding of codes.

Note that, in the present description, although only comparison of the distance is performed since the lengths ranking is given based on a distance in a prescribed direction of an interval between information dots, and codes are encoded by permutations and combinations, a threshold value for specifying a numerical value of a prescribed distance of an interval between information dots which are read is configured, and a numerical value of the prescribed distance is calculated, and thereby, codes can be encoded using the distance numerical value itself.

In this case, when a distance numerical value configured at the time of generating the dot pattern is assumed to be D, errors due to a dot arrangement deformation, a deviation in printing and a distortion of a printing medium of photographed images in a state where a camera is inclined are also taken into consideration, and as for the threshold value in that case, $\gamma$, and $\gamma_2$ are configured as an absolute value, and D can be specified from $\gamma_1 \leq D \leq \gamma_2$. Note that, this method is used and may be used in searching for the reference dot having a distance between reference dots which is different from the distance in a prescribed direction of an interval between information dots. In addition, the read numerical values of a prescribed distance of an interval between information dots and the ranking of the distances can also be used while combined. This means that the same code can be encoded even in a case of a different arrangement of dots, and it can be that the decryption of codes is difficult, and security is excellent. In addition, varying information such as manufacturing and shipping date are allocated to a numerical value of a distance, and a serial number is given depending on the ranking of distances, and thereby, advanced traceability is realizable. Note that it is needless to say that information allocated to the combination of the numerical value of the distance and the ranking of the distance is may be reversed.

As mentioned above, although a generation method of a dot pattern and code encoding which encodes codes by permutations and combinations of distance lengths with respect to a distance in a prescribed direction of an interval between information dots have been described, the encoding conditions of (1) to (6) mentioned above are applicable in a dot pattern where codes are encoded by permutations and combinations of distance lengths with respect to a distance of an interval between information dots.

<Method to read dot pattern generated based on distance in prescribed direction of interval between information dots, and decoding of code>

As mentioned above, as for reading of a dot pattern by an optical reading device,

(1) Binarization of an imaged dot pattern image is performed, and pixels constituting the dot is specified.

(2) A representative point of a dot is calculated from coordinate values of pixels constituting the dot. XY coordinate values of pixels are each added simply, and divided by the number of pixels constituting this dot, and thereby, a center coordinate value (average coordinate value) of the dot is calculated, and the center coordinate value is made to be the coordinate value of the representative point. Alternatively, in order to calculate the coordinate value of the representative point still more accurately, while weighting is carried out for every pixel based on a darkness level when binarization is carried out in (1), the coordinate value of the representative point of the dot may be calculated by the above-mentioned method.

(3) A first dot sequence arranged on a straight line is searched for from coordinate values of dots, and a second dot sequence arranged on a straight line while intersected with the first dot sequence is searched for. Note that, although the above-mentioned intersection is a rectangular intersection usually, since the rectangular intersection is not maintained when the dot pattern is imaged with an optical reading device inclined against a paper surface, it is necessary to search for the second dot sequence while intersected at an angle in a prescribed range is taken into consideration.

(4) A reference dot sequence which specifies a direction of a dot pattern is searched for in the first or second dot sequences. As for the searching method, a distance between reference dots is assumed to be $D_n$ (n denotes a number for any interval between reference dots), and threshold values $_n\gamma_1$ and $_n\gamma_2$ are configured as an absolute value, and $D_n$ is specified from $_n\gamma_1 \leq D \leq _n\gamma_2$, and a reference dot sequence is searched for.

(5) Next processing is will be executed when a reference dot sequence which specifies a direction of a dot pattern can be specified by any of the first or second dot sequence, and the other reference dot sequences also conforms to conditions, and however, otherwise, processing is performed again from (3), and other first or second dot sequence is searched for.

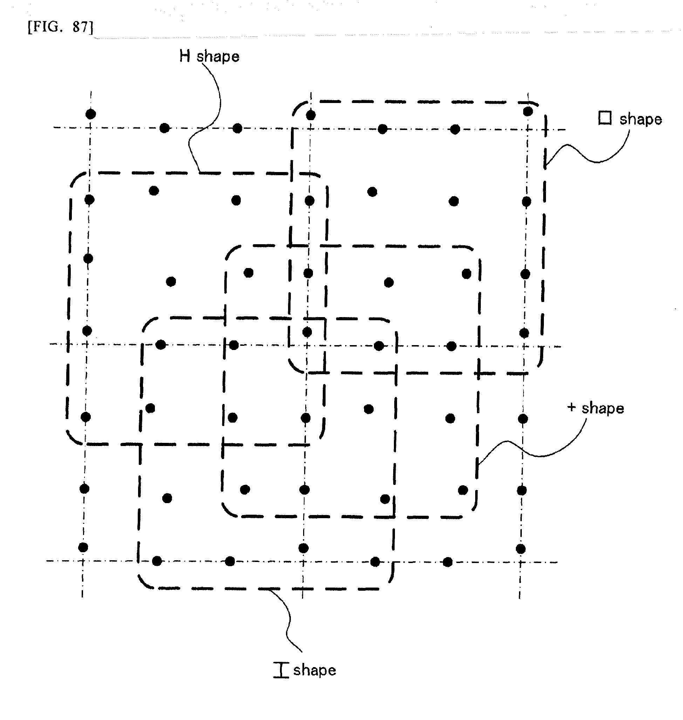

(6) By the direction of the dot pattern being specified, arrangements of information dots in a row direction and column direction are found, and in a row direction and column direction, ranking of each distance in a prescribed direction of an interval between information dots from reference dots which are starting-point information dots is calculated by the above-mentioned comparison operation equation. Here, a region surrounded by reference dots arranged in a rectangle is not necessarily necessary for calculation, and as illustrated by the inside of a broken line frame in FIG. 87, lateral and vertical sequences of reference dots may be arranged in a + shape, a H shape and a I shape in addition to a □ shape. The reason is because when needful each interval of an interval between information dots in a row direction and column direction is included in the calculation region without omission, the ranking of each distance in a prescribed direction of an interval between information dots can be calculated in the same way. That is, in the calculation region, information dots in upper and lower rows mutually and information dots in left and right columns mutually may have the same information dots arranged. As a matter of course, the dot pattern may be generated by these arrangements. Note that, FIG. 87 illustrates an example of the dot pattern generated based on a distance of an interval between information dots, and it is needless to say that a dot pattern generated by the distance in a prescribed direction of an interval between information dots is also the same.

(7) Decoding is carried out into codes using a decoding table illustrated in FIG. 79 and a mathematical function on the basis of the lengths ranking of the distance in a prescribed direction of information dots in a row direction and column direction. The code may denote at least one code value, and may be a coordinate value. As a matter of course, the code value and coordinate value may be included. The coordinate value may be a coordinate value such as an XY coordinate value and XYZ coordinate value based on various coordinate systems.

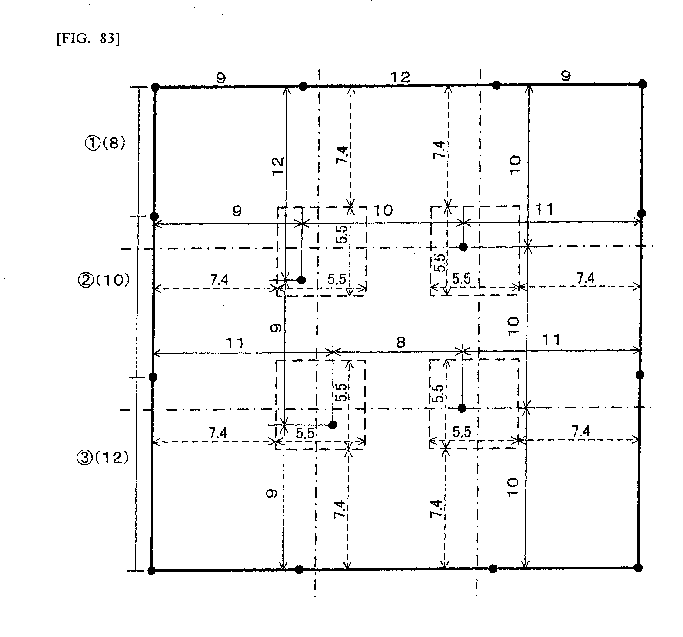

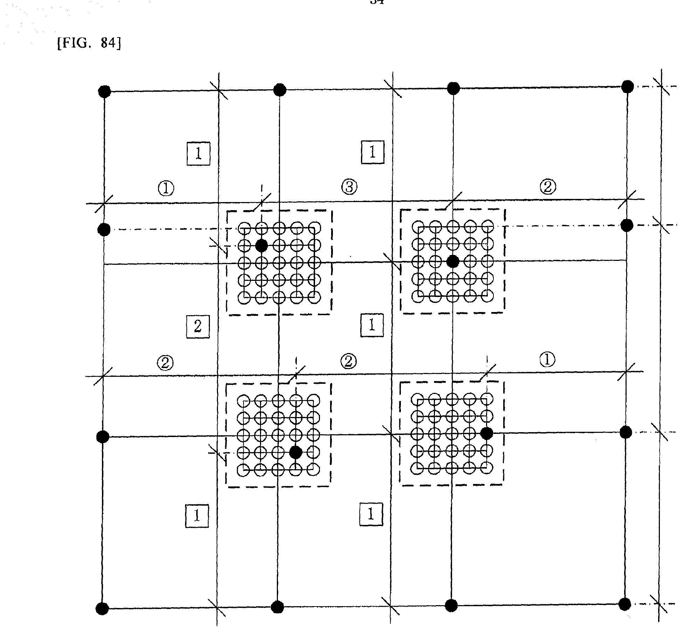

Note that, regions indicated by a dashed line in FIGS. 83 and 84 are the maximum region where information dots at the time of reading the dot pattern are located, and have corresponded to the region where a deviation in printing, a distortion of a printing medium, and a dot arrangement deformation due to a camera inclination (30 to 40 degrees) at the time of dot pattern reading are taken into consideration. As for the present region, the distance L in a prescribed direction from each of reference dots to information dots will be $L/\gamma \leq L \leq \gamma L$, and here, when an error based on (3) of <Second example of generation method of dot pattern and code encoding> is $\beta = 0.95$, based on (6) of <Second example of generation method of dot pattern and code encoding>, the threshold value $\gamma = 1.079$ is given, and from each of reference dots, $8/1.079 \approx 7.4$ to $1.079 \times 12 = 12.9$ is given, and information dots are located in a region of $5.5 \times 5.5$ by $12.9 - 7.4 = 5.5$. Therefore, only dots located in this region may be made to be targets as information dots, and an error dot due to scattering of a contaminant or ink can be excluded considerably.

As mentioned above, although the method to read dot patterns and decoding of codes which decodes codes based on permutations and combinations of distance lengths of a distance in a prescribed direction of an interval between information dots have been described, the method of reading and decoding of codes of the above mentioned (1) to (7) are applicable in the dot pattern where codes is decoded based on permutations and combinations of distance lengths of a distance of an interval between information dots.

<Generation method of dot pattern generated based on distance of an interval between information dots, and method of reading>

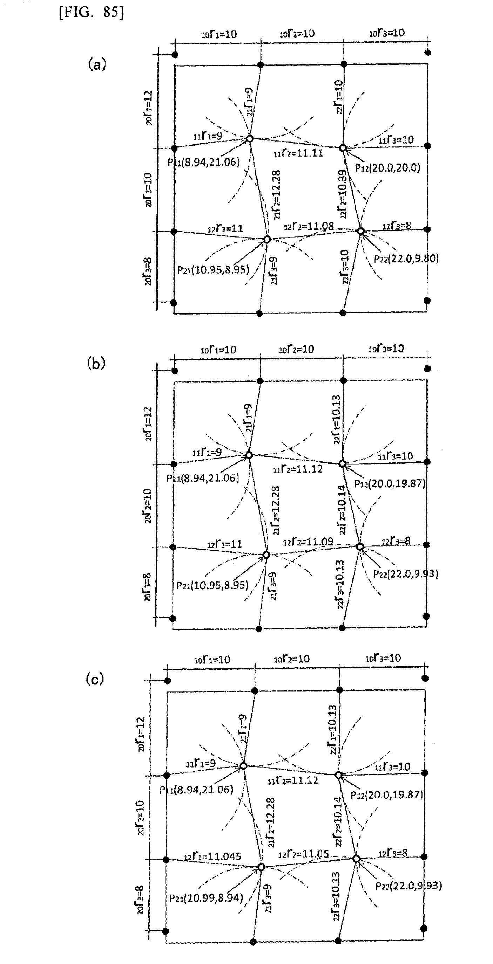

A generation method of a dot pattern where codes are encoded based on a distance of an interval between information dots will be described using FIG. 85.

The target dot pattern has reference dots arranged in rows and columns of both ends, and is constituted by four rows x four columns, and reference dots of the first row and fourth row among vertical reference dots arranged at equal intervals in the left and right columns are shifted in an upper direction, and a direction of the dot pattern has been determined. Horizontal reference dots arranged in the upper and lower rows are arranged at equal intervals. Note that, it is needless to say that this way of determining the direction of dot pattern is equivalent to that reference dots of the first column and fourth column among the vertical reference dots arranged at equal intervals in the upper and lower rows are shifted in an upper direction, and a direction of the dot pattern is determined.

This arrangement of reference dots in the column direction is assumed to have a distance between reference dots which has a different distance from a distance in a prescribed direction of an interval between information dots. As illustrated in FIG. 85, reference dots in the left column have a permutation of distance values (12) (10) and (8) from the top. This permutation is not made to be used in other permutations of a distance of an interval between information dots, and thereby, the direction and boundary of the dot pattern can be defined by an arrangement of reference dots arranged on a straight line in the left column. Note that, in the present example, although an interval between reference dots which adjoin information dots is an equal interval, when an arrangement of reference dots can be specified as a pattern, any arrangement may be applicable.

When a dot pattern where codes are encoded based on a distance of an interval between information dots is generated, a distance of an interval between information dots cannot be arranged uniquely while determined optionally. Therefore, the distance in a prescribed direction of an interval between information dots configured in FIG. 77 is used as an initial value, and if conditions are not matched based on lengths conditions of the distance described in <Second example of generation method of dot pattern and code encoding>, the position of the corresponding information dot is shifted and corrected, and codes are encoded by permutations and combinations of lengths of this distance. As for combinations among three intervals between information dots, there are four cases of the lengths ranking in an ascending order: (No. (1), No. (2), No. (3)), (No. (1), No. (1), No. (2)), (No. (1), No. (2), No. (2)), and (No. (1), No. (1), No. (1)). When the interval between reference dots is assumed to be 10, since the above-mentioned combinations (9,10,11), (9,9,12), (8,11,11) and (10,10,10) are configured so that the sum total may become 30 or more in the distance in a prescribed direction, these are used as initial values of a distance from the reference dot to the information dot.

In a dot pattern of four rows ×four columns in FIG. 85 (a), each of four information dots ($P_{11}$, $P_{12}$. $P_{21}$ and $P_{22}$) adjoins two reference dots, and is arranged while an interval of an interval between information dots for encoding is formed. Therefore, centering on eight reference dots which form an interval between information dots, a circle is drawn with an initial value of this interval distance as a radius, and the information dot may be arranged at an intersection point of circles drawn from two reference points mentioned above. That is, an information dot $P_{11}$ is arranged at an intersection point of a circle drawn by a radius $_{11}r_1$=9 from the reference dot of second row first column and a circle drawn by a radius $_{21}r_1$=9 from the reference dot of first row second column, and an information dot $P_{12}$ is arranged at an intersection point of a circle drawn by a radius $_{11}r_3$=10 from the reference dot of second row fourth column and a circle drawn by a radius $_{21}r_1$=10 from the reference dot of first row third column, and an information dot $P_{21}$ is arranged at an intersection point of a circle drawn by a radius $_{12}r_1$=11 from the reference dot of third row first column and a circle drawn by a radius $_{21}r_3$=9 from the reference dot of fourth row second column, and an information dot $P_{22}$ is arranged at an intersection point of a circle drawn by a radius $_{12}r_3$=8 from the reference dot of third row fourth column and a circle drawn by a radius $_{22}r_3$=10 from the reference dot of fourth row third column. As the result, when an distance of an arranged interval between information dots is measured, distances of an interval between information dots will be (9, 11.11, 10) in the sequence of second row, (11, 11.08, 8) in the sequence of third row, (9, 12.28, 9) in the sequence of second column, and (10, 10.39, 10) in the sequence of third column. Here, when an error based on (3) of <Second example of generation method of dot pattern and code encoding> is β= 0.95, based on (5) of <Second example of generation method of dot pattern and code encoding>, α=1.105 will be given.

Here, when the above-mentioned sequences of distances of an interval between information dots are evaluated based on the condition (2) of <Second example of generation method of dot pattern and code encoding>, it turns out that all the sequences have satisfied this condition. However, $_{22}r_1$, $_{22}r_2$ and $_{22}r_3$ which are needed to be the same have become (10, 10.39, 10), and $_{12}r_1$ and $_{12}r_2$ ($_{12}r_3$) which are needed to be the same have become (11, 11. 08, 8). Then, distances of the interval between information dots with $_{22}r_1$ and $_{22}r_3$ corrected are configured, and calculation is carried out again.

As for the correction, as illustrated in FIG. 85 (b), first, re-calculation is carried out as $_{22}r_1=_{22}r_3$=10.13 from $(_{22}r_1+_{22}r_2+_{22}r_3)$ / 3=10.13, and the dot pattern is re-arranged. As the result, $_{22}r_1$, $_{22}r_2$, and $_{22}r_3$ become (10.13, 10.14, 10.13), and $_{22}r_1$, $_{22}r_2$, and $_{22}r_3$ become almost the same. With respect to few errors, when the error is 10% or less of a difference error which β= 0.95 shows, that is, few errors mentioned above are within 0.5%, it can be that there is no influence on lengths determination based on the distance of the interval between information dots since sufficient safety factor has been secured in calculation of α=1.105.

Next, as for correction of $_{12}r_1$ and $_{12}r_2$ ($_{12}r_3$) (11, 11.09, 8), as illustrated in FIG. 85 (c), first, re-calculation is carried out as $_{12}r_1$=11.045 from $(_{12}r_1+_{12}r_2)$ / 2=11.045, and the dot pattern is re-arranged. As the result, $_{12}r_1$, $_{12}r_2$, and $_{12}r_3$ become (11.045, 11.05, 8), and $_{12}r_1$ and $_{12}r_2$ become almost the same. Note that, although an example where reference dots are arranged at equal intervals has been illustrated, it is needless to say that the dot pattern can be generated by the present method in the same way even in a case of other arrangement of reference dots.

The above-mentioned convergence calculation is performed, and based on a distance of an interval between information dots, a dot pattern where codes are encoded can be generated, and however, an arrangement of the dot pattern may be generated by any method. In addition, without determining an arrangement of dots at the time of generating the dot pattern, arrangements of information dots to reproduce distances of information dots of all the combinations are calculated by computation in advance and stored it in a table, and the dot pattern may be generated while the table is referred to at the time of generation.

Here, although an example of a dot pattern constituted by four rows x four columns has been illustrated, dot patterns can be arranged by the same generation method even when the row and column are increased. Although not illustrated, in a dot pattern constituted by five rows x five columns, for example, there are nine information dots except reference dots, and four information dots arranged at the corner among the nine adjoin two reference dots, and configure an initial value of the distance of the interval between information dots in the same way as FIG. 85. Next, as for an information dot located between information dots each in two corners in a row or column direction, calculated is an intersection point of circles drawn while distance configured by an initial value from one adjacent reference dot and either of information dots in two corners made to be a radius. In the same way, an intersection point with an information dot in the other corner is calculated, and an intermediate value of the two intersection points is arranged as an information dot located between information dots of two corners. Finally, positions of information dots located near the center are calculated in the same way. Subsequently, the position of the information dot is shifted and corrected until conditions are matched, and arrangements of nine information dots are configured, and encoding is carried out by permutations and combinations of lengths of distances of all intervals between information dots.

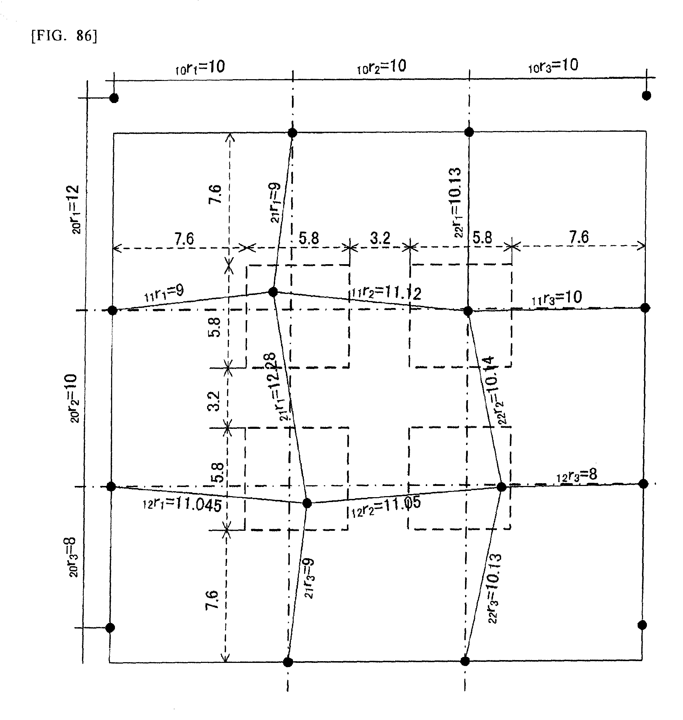

Next, a method of reading the dot pattern generated based on the distance of the interval between information dots will be described using FIG. 86.

The present reading method is completely the same as the method to read a dot pattern described in (1) to (7) of <Method to read dot pattern generated based on distance in prescribed direction of an interval between information dots, and decoding of code>, and a description of "distance in a prescribed direction of an interval between information dots" may be read as a "distance of an interval between information dots".

Note that, a region illustrated with a dashed line in FIG. 86 is the maximum region where information dots are located when read by a camera, and have corresponded to the region where a deviation in printing, a distortion of a printing medium, and a dot arrangement deformation due to a camera inclination (30 to 40 degrees) at the time of dot pattern reading are taken into consideration. As for the present region, the distance L from the each reference dot to the information dot will be $L/\gamma \leq L \leq \gamma L$, and here, when an error based on (3) of <Second example of generation method of dot pattern and code encoding> is $\beta = 0.95$, based on (6) of <Second example of generation method of dot pattern and code encoding>, the threshold value $\gamma = 1.079$ is given, and the minimum distance ($\approx 7.6$, in a case of L=8 from any of two reference dots) in a prescribed direction from each of reference dots to information dots to the maximum distance (12) will gives $7.6/1.079 \approx 7.1$ to $1.079 \times 12 = 12.9$, and the information dot is located in the region of 5.8x5.8 by 12.9-7.1=5.8. Therefore, only dots located in this region may be made to be targets as information dots, and an error dot due to scattering of a contaminant or ink can be excluded considerably.

Note that, in <Method to read dot pattern generated based on distance in prescribed direction of an interval between information dots, and decoding of code> and <Generation method of dot pattern generated based on distance of an interval between information dots, and method of reading>, as for the method to read the dot pattern and decoding of codes, although a method to decode codes by measuring directly the distance in a prescribed direction of the interval between information dots from an arrangement of dots in a photographed image has been described, it is needless to say that codes may be decoded by returning a dot arrangement which is deformed due to camera inclination to the original arrangement before the deformation. A typical method in that case is the method where a coordinate transformation matrix is calculated on the basis of deformation situation of arrangements of reference dots, which have been specified by (1) to (5) of <Method to read dot pattern generated based on distance in prescribed direction of an interval between information dots, and decoding of code>, and the matrix is multiplied by coordinate values of all the dots, and the arrangement before deformation is recovered. As other methods, there is a method where a coordinate transformation matrix is calculated from a change (gradation) of brightness of an image which is imaged, and the arrangement before deformation is recovered. In this method, after conversion of the coordinate value of the dot, (1) to (7) of <Method to read dot pattern generated based on distance in prescribed direction of an interval between information dots, and decoding of code> may be carried out. These methods need much calculation amount, and how suitable coordinate transformation matrix is calculated becomes the biggest subject, and however, a dot arrangement deformation due to a camera inclination which occupies the most influences in P is not necessary to be taken into consideration, and $\alpha$ configuration is able to be close to 1. Thereby, it is possible to suppress a pattern generated when arrangements of information dots are unevenly distributed, and make a visual effect enhanced. On the other hand, as for the present method, it becomes possible to configure finely steps for configuring the distance in a prescribed direction of the interval between information dots and the distance of the interval between information dots, and much more information can be defined.

As mention above, processing to read the dot pattern, and to calculate and decode the ranking of the distance in a prescribed direction of the interval between information dots or the lengths of the distance in a prescribed direction of the interval between information dots is carried out by a program and/or a circuit which are built-in in an optical reading device (camera).

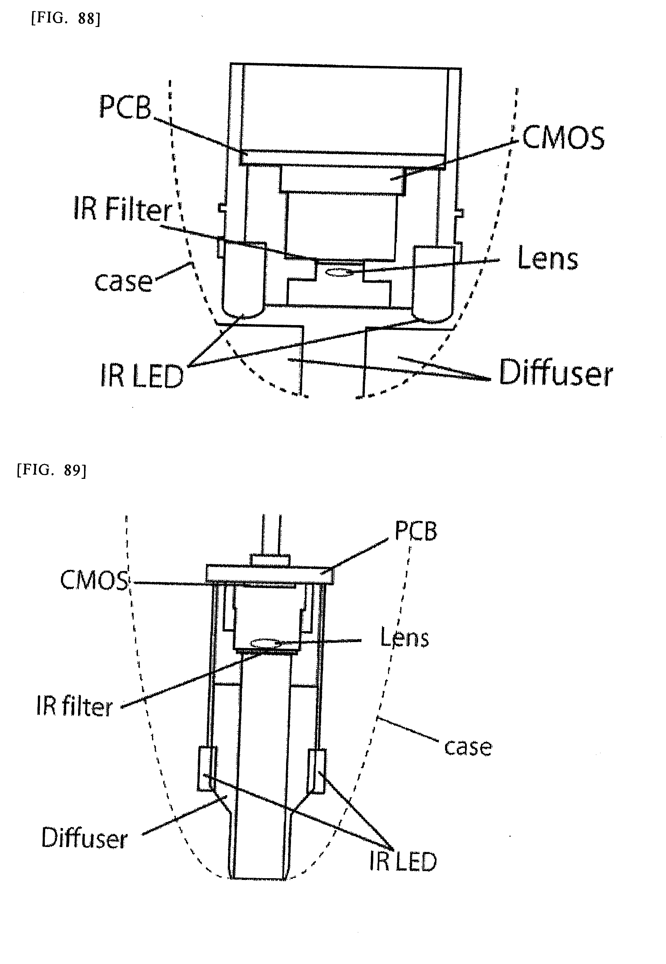

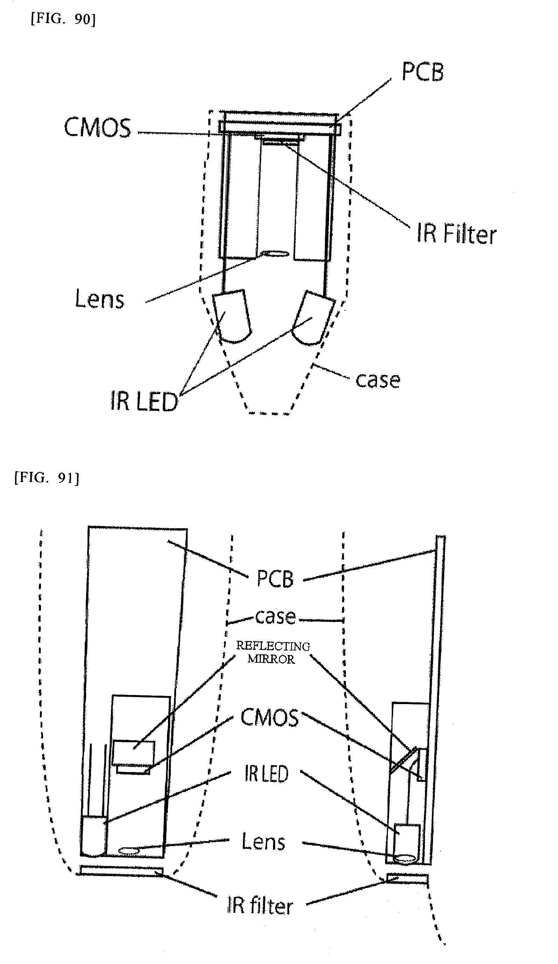

FIGS. 88 to 91 illustrate an example of a structure of an optical reading device, and any one irradiates a medium surface with infrared light from an IR LED, and reflected light from the medium surface is converged by Lens through IR Filter, and is imaged on a CMOS sensor. Note that, imaging through a pinhole without using Lens is also possible by irradiating with a considerably strong infrared light. In FIGS. 88 and 89, by irradiating the medium surface with infrared light emitted from IR LED through Diffuser, irradiation to the medium surface with uniform infrared light has been realized. This is because strength of infrared light reflected specularly on the medium surface is reduced, and dots are made to be imaged surely so that a highlight of a photographed image may not be generated. In addition, also when a pen is inclined, also in a region in a position remote from a set point of a pen on the medium surface, it is possible to secure brightness to such an extent that dots may be recognized. In FIGS. 90 and 91, by arranging IR LED at a position close to the medium surface, a highlight is kept from arising near the center section of a photographed image. Note that, although an example of a structure of the optical reading device is illustrated, it is not necessary to adhere to the present specification. As a matter of course, light with which irradiation is carried out may not be infrared light, but may be light with other frequencies. It is important that light is applied and dots can be recognized by receiving the reflected light, and for that purpose, any configuration may be acceptable. For example, as light with which irradiation is carried out, natural light or visible light is used, and dots may be recognized by image processing etc.

Codes decoded by the optical reading device are transmitted through a radio or a cable from the optical reading device to electronic apparatuses such as various PCs, a mobile phone, a smart phone, a TV, a STB, an audio apparatus, a game machine and an IP, and corresponding processing is performed. Note that information corresponding to decoded codes may be transmitted. In addition, the optical reading device performs only imaging of the dot pattern, and transmits imaged dot pattern images to the above-mentioned electronic apparatus etc., and decoding may be carried out by the electronic apparatuses. In addition, in the optical reading device provided with an audio output device or a display device, information corresponding to decoded codes may read from a storage medium provided in the inside or the outside, and may be outputted. Information corresponding to the above-mentioned codes may not be data, but may be an address, file name and processing instructions, in which information are stored. These codes and information are transmitted to a server (cloud) via the Internet, and corresponding information are transmitted from the server to the above-mentioned electronic apparatuses and optical reading device, and corresponding processing can be carried out furthermore.

Industrial Applicability

The present invention can record a lot of information with few dot densities, and can be widely used for a security system, forgery prevention, purchase and distribution of music and video with accounting accompanied and catalog shopping since the recorded information is not able to be decoded easily by a third party from coordinate values where dots have been arranged. However, industrial applicability of the present invention is not limited to the above, and there is applicability in all kinds of aspects such as a conventional education system, a toy and a game etc.

Claims

1. A dot pattern provided with two or more information dots, wherein the dot pattern is provided with at least 1 set of a starting-point information dot that is an information dot to be a starting point and an end-point information dot that is an information dot to be an end point, and the two or more information dots are arranged while an interval between information dots which adjoin each other in a prescribed order from the starting-point information dot has a prescribed distance value or a prescribed distance value of a prescribed direction interval, and codes are encoded based on the prescribed distance value or the prescribed distance value of prescribed direction interval.

2. The dot pattern according to claim 1, wherein the each information dot arranged in the prescribed order is arranged at a position where the prescribed distance value is the nearest from an information dot of a last in the order.

3. The dot pattern according to claim 1, wherein each information dot arranged in the prescribed order is arranged in a prescribed direction from an information dot of a last in the order.

4. The dot pattern according to claim 1, wherein each information dot arranged in the prescribed order is arranged in a prescribed direction from the starting-point information dot.

5. The dot pattern according to claim 1, wherein two or more of the end-point information dots are included, and each information dot arranged in the prescribed order is arranged in a prescribed order in two or more prescribed directions from the starting-point information dot.

6. The dot pattern according to any of claims 3 or 4, wherein each information dot arranged in the prescribed order is arranged while having each prescribed rotation angle with respect to a prescribed direction from an information dot of a last in the order.

7. The dot pattern according to any of claims 3 or 4, wherein as for each information dot arranged in the prescribed order, an information dot next in the order to the starting-point information dot is arranged while having a prescribed rotation angle with respect to a prescribed direction from the starting-point information dot, and subsequent information dots are arranged each while having a prescribed rotation angle with respect to a line segment connecting the second last information dot with the last information dot in the order

8.  The dot pattern according to any of claims 1 to 7, wherein
    the starting-point information dot is an information dot identifiable from other information dots.

9.  The dot pattern according to claim 8, wherein
    the starting-point information dot is identifiable from other information dots based on at least one or combinations of a size different from others, a shape, colors, arrangement position and optical characteristics.

10. The dot pattern according to claim 1, wherein
    as for two or more information dots arranged in the prescribed order, the order can be specified based on at least one or combinations of a size different from others, a shape, colors, arrangement position and optical characteristics.

11. The dot pattern according to claim 1, wherein
    codes are encoded based on a distance value or a distance value of a prescribed direction interval from the starting-point information dot or a prescribed information dot to other information dots.

12. A dot pattern provided with two or more information dots, wherein
    the dot pattern is provided with at least 1 set of a starting-point information dot that is an information dot to be a starting point, and an end-point information dot that is an information dot to be an end point, and the two or more information dots are arranged while an interval between information dots which adjoin each other in a prescribed order from the starting-point information dot has a prescribed distance value or a prescribed distance value of a prescribed direction interval constant, and codes are encoded based on a value of a prescribed rotation angle from a prescribed direction held by the information dots.

13. The dot pattern according to any of claims 6 or 7, wherein
    codes are encoded based on combinations of the prescribed rotation angle and the prescribed distance value or prescribed distance value of a prescribed direction interval.

14. The dot pattern according to claim 1, wherein
    in the prescribed order, codes are encoded by at least any of lengths ranking permutations, lengths ranking combinations, ratio permutations, ratio combinations, or absolute values, absolute value permutations, absolute value combinations with respect to the prescribed distance value or prescribed distance value of a prescribed direction interval.

15. The dot pattern according to claim 12, wherein
    in the prescribed order, codes are encoded by at least any of size ranking permutations, size ranking combinations, ratio permutations, ratio combinations, or absolute values and absolute value permutations, absolute value combinations with respect to a value of the prescribed rotation angle.

16. A dot pattern, wherein codes are encoded while a plurality of dot patterns described in any of claims 1 to 15 are arranged side by side.

17. A dot pattern, wherein dot patterns described in any of claims 1 to 15 are arranged in the two or more rows and two or more columns, and codes are encoded in the two or more rows and two or more columns.

18. A dot pattern, wherein dot patterns described in any of claims 1 to 15 are arranged in the two or more rows, two or more columns, and two or more depths, and codes are encoded in the two or more rows, two or more columns, and two or more depths.

19. A dot pattern provided with two or more information dots arranged in two or more rows and two or more columns, wherein
    the two or more rows and two or more columns are each provided with one set of a starting-point information dot that is an information dot to be a starting point and an end-point information dot that is an information dot to be an end point, and a belt-like dot pattern where an interval between information dots which adjoin each other in a prescribed order from the starting-point information dot has a prescribed distance value or prescribed distance value of a prescribed direction interval is arranged, and
    in each of the two or more rows and two or more columns, codes are encoded based on the prescribed distance value or prescribed distance value of a prescribed direction interval.

20. The dot pattern according to claim 19, wherein
    at least one or more dots of two or more of the information dots constitute both of the two or more rows and two or more columns.

21. The dot pattern according to any of claims 19 or 20, wherein
    among the information dots, at least any of a starting-point information dot and an end-point information dot in the two or more rows and/or at least any of a starting-point information dot and an end-point information dot in the two or more columns are reference dots to be a reference which are arranged at a prescribed interval on a virtual reference line orthogonal to a row or column.

22. The dot pattern according to any of claims 19 to 21, wherein

among the information dots, at least any of a starting-point information dot and an end-point information dot in the two or more rows and/or at least any of a starting-point information dot and an end-point information dot in the two or more columns are reference dots to be a reference which are arranged at a prescribed interval on a virtual reference line orthogonal to a row or column.

23. The dot pattern according to any of claims 21 or 22, wherein
a reference dot is arranged furthermore at a position where extended lines of virtual reference lines orthogonal to the row and column intersect.

24. The dot pattern according to any of claims 21 to 23, wherein
with respect to a center parting line or a central point between reference dots of both ends arranged on a virtual reference line orthogonal to the row or column, the prescribed interval is determined and a direction of a dot pattern is defined so that reference dots on the virtual reference line become asymmetrical or non-axisymmetrical.

25. The dot pattern according to any of claims 21 to 23, wherein
at least one or more reference dots arranged on the virtual reference line are arranged while shifted in a prescribed direction, and a direction of a dot pattern is defined.

26. The dot pattern according to any of claims 19 or 20, wherein
among the information dots, at least any of a starting-point information dot and an end-point information dot in the two or more rows and/or at least any of a starting-point information dot and an end-point information dot in the two or more columns are reference dots to be a reference arranged in prescribed shape in a direction orthogonal to a row or column, and
a direction of a dot pattern is defined based on arrangement of the reference dots.

27. The dot pattern according to claim 26, wherein
a direction of the dot pattern is defined based on a prescribed shape being expressed by arrangement of all or a part of the reference dots.

28. The dot pattern according to claim 26, wherein
a direction of the dot pattern is defined based on all or a part of the reference dots being arranged by prescribed permutations.

29. The dot pattern according to claim 26, wherein
a reference dot is arranged furthermore in a region where a row direction and column direction of reference dots arranged in the prescribed shape intersect.

30. The dot pattern according to any of claims 19 to 25, wherein
a prescribed direction of an interval between adjacent information dots arranged in the row direction is assumed to a vertical direction, and a prescribed direction of an interval between adjacent information dots arranged in the column direction is assumed to a horizontal direction.

31. The dot pattern according to any of claims 26 or 29, wherein
a prescribed direction of an interval between adjacent information dots arranged in the row direction or column direction is assumed to be a direction of a line segment connecting any two reference dots arranged in a prescribed shape in a direction orthogonal to a row or column where the information dots are arranged.

32. The dot pattern according to any of claims 21 to 31, wherein
the code is encoded based on a prescribed distance value or prescribed distance value of a prescribed direction interval between the adjacent reference dots arranged in a row direction or column direction.

33. The dot pattern according to any of claims 19 to 32, wherein
two or more of the dot pattern are arranged while connected at a prescribed interval vertically or laterally at least.

34. The dot pattern according to any of claims 21 to 32, wherein
reference dots arranged in the two or more of both ends of rows and/or both ends of columns have the same shape mutually, and
two or more of the reference dots are connected in a lateral and/or vertical direction while overlapped.

35. The dot pattern according to any of claims 21 to 32, wherein
reference dots arranged in the two or more of both ends of rows and/or both ends of columns have the same shape mutually, and
two or more of the reference dots are connected in a lateral and/or vertical direction while overlapped, and
in the other directions, are connected and arranged in a prescribed interval.

36. The dot pattern according to any of claims 33 to 35, wherein
arrangement of the reference dot sections each region where at least two or more dot patterns are arranged.

**37.** The dot pattern according to any of claims 19 to 36, wherein
codes are encoded by at least any of lengths ranking permutations, lengths ranking combinations, ratio permutations, ratio combinations, or absolute values, absolute value permutations, absolute value combinations with respect to the prescribed distance value or prescribed distance of a prescribed direction interval.

**38.** A dot pattern provided with two or more information dots arranged in two or more rows and two or more columns, wherein
the two or more rows and two or more columns are each provided with one set of a starting-point information dot that is an information dot to be a starting point and an end-point information dot that is an information dot to be an end point, and as for the two or more information dots, while an interval between information dots which adjoin each other in a prescribed order from the starting-point information dot has a prescribed distance value or a prescribed distance value of a prescribed direction interval constant, a dot pattern is arranged in a belt-like shape, and
in each of the two or more rows and two or more columns, codes are encoded by at least any of size ranking permutations, size ranking combinations, ratio permutations, ratio combinations, or absolute values and absolute value permutations, absolute value combinations with respect to a value of a rotation angle from the prescribed direction held by the information dot.

**39.** The dot pattern according to claim 19, wherein
the belt-like dot pattern is a dot pattern described in any of claims 1 to 15.

**40.** A dot pattern formation medium, wherein a dot pattern described in any of claims 1 to 39 is formed.

**41.** A program, wherein image data of a dot pattern described in any of claims 1 to 39 is generated.

**42.** A dot pattern formation device, wherein a dot pattern described in any of claims 1 to 39 is formed in a medium.

**43.** An optical device, comprising:

an imaging device that images a dot pattern described in any of claims 1 to 39; and
a transmission device that transmits the photographed image.

**44.** An optical reading device, comprising:

an imaging device that images a dot pattern described in any of claims 1 to 39; and
a decoding device that decodes the photographed image into codes; and
a transmission device that transmits the code.

**45.** An information input/output device, comprising:

an imaging device that images a dot pattern described in any of claims 1 to 39;
a decoding device that decodes the photographed image into codes;
a storage device that stores information corresponding to the code; and
an output device that outputs information corresponding to the code.

**46.** An information input/output device, comprising:

an imaging device that images a dot pattern described in any of claims 1 to 39;
a decoding device that decodes the photographed image into codes;
a searching device that searches Internet for information corresponding to the code; and
an output device that outputs information corresponding to the code.

**47.** An information input/output device, comprising:

an imaging device that images a dot pattern described in any of claims 1 to 39;
a decoding device that decodes the photographed image into codes;
a searching device that searches Internet for information corresponding to the code;
a storage device that stores information corresponding to the code; and
an output device that outputs information corresponding to the code.

**48.** A dot pattern reading device, comprising:

an imaging device;
a processing device; and
a storage device in which one or more programs executed by the processing device are stored, wherein
one or more programs executed by the processing device include:

processing to detect a dot pattern described in any of claims 1 to 39 from an image imaged by the imaging device; and
processing to decode codes encoded by the dot pattern.

**49.** A dot pattern reading method, comprising:

processing to detect a dot pattern described in any of claims 1 to 39 from an image imaged by the imaging device; and
processing to decode codes encoded by the dot pattern.

50. A dot pattern generation method to generate a dot pattern provided with two or more information dots arranged in two or more rows and two or more columns, comprising:

arranging, in the two or more rows and two or more columns, one set of a starting-point information dot that is an information dot to be a starting point and an end-point information dot that is an information dot to be an end point;
arranging, as for the two or more information dots, a belt-like dot pattern where an interval between information dots which adjoin each other in a prescribed order from the starting-point information dot has a prescribed distance value or prescribed distance value of a prescribed direction interval; wherein
codes are encoded based on the prescribed distance value or prescribed distance value of a prescribed direction interval in each of the two or more rows and two or more columns.

51. A dot pattern reading program, comprising:

processing to detect a dot pattern described in any of claims 1 to 39 from an image imaged by the imaging device; and
processing to decode codes encoded by the dot pattern.

[FIG. 1]

[FIG. 2]

[FIG. 3]

[FIG. 4]

[FIG. 5]

EP 2 905 727 A1

[FIG. 6]

[FIG. 7]

[FIG. 8]

[FIG. 9]

31

EP 2 905 727 A1

[FIG. 10]

[FIG. 11]

[FIG. 12]

[FIG. 13]

[FIG. 14]

[FIG. 15]

[FIG. 16]

[FIG. 17]

[FIG. 18]

[FIG. 19]

[FIG. 20]

[FIG. 21]

EP 2 905 727 A1

[FIG. 22]

[FIG. 23]

[FIG. 24]

[FIG. 25]

[FIG. 26]

2nd by L → P₁

P₀

3rd by L

1st by L    P₃

P₂    4th by L    P₄

3rd by W ¦ 1st by W ¦ 2nd by W ¦ 4th by W

[FIG. 27]

P₀ ① P₁ ② P₃
        P₂ ③        ④
                    P₄

P₀ ① P₁ ②      P₃ ③
        P₂    ④    P₄

P₀ ① P₁ ③ P₃
        P₂ ②      ④
                    P₄

P₀ ① P₁ ③    P₃ ②
        P₂    ④    P₄

EP 2 905 727 A1

[FIG. 28]

[FIG. 29]

[FIG. 30]

38

[FIG. 31]

| | TYPE NO. 4 | | | TYPE NO.3 | | | TYPE NO.2 | |
|---|---|---|---|---|---|---|---|---|
| No. | CASE | CODE | No. | CASE | CODE | No. | CASE | CODE |
| 1 | ①→②→③→④ | 1 | 1 | ①→①→②→③ | 25 | 1 | ①→①→①→② | 61 |
| 2 | ①→②→④→③ | 2 | 2 | ①→①→③→② | 26 | 2 | ①→①→②→① | 62 |
| 3 | ①→③→②→④ | 3 | 3 | ①→②→①→③ | 27 | 3 | ①→①→②→② | 63 |
| 4 | ①→③→④→② | 4 | 4 | ①→②→②→③ | 28 | 4 | ①→②→①→① | 64 |
| 5 | ①→④→②→③ | 5 | 5 | ①→②→③→① | 29 | 5 | ①→②→①→② | 65 |
| 6 | ①→④→③→② | 6 | 6 | ①→②→③→② | 30 | 6 | ①→②→②→① | 66 |
| 7 | ②→①→③→④ | 7 | 7 | ①→②→③→③ | 31 | 7 | ①→②→②→② | 67 |
| 8 | ②→①→④→③ | 8 | 8 | ①→③→①→② | 32 | 8 | ②→①→①→① | 68 |
| 9 | ②→③→①→④ | 9 | 9 | ①→③→②→① | 33 | 9 | ②→①→①→② | 69 |
| 10 | ②→③→④→① | 10 | 10 | ①→③→②→② | 34 | 10 | ②→①→②→① | 70 |
| 11 | ②→④→①→③ | 11 | 11 | ①→③→②→③ | 35 | 11 | ②→①→②→② | 71 |
| 12 | ②→④→③→① | 12 | 12 | ①→③→③→② | 36 | 12 | ②→②→①→① | 72 |
| 13 | ③→①→②→④ | 13 | 13 | ②→①→①→③ | 37 | 13 | ②→②→①→② | 73 |
| 14 | ③→①→④→② | 14 | 14 | ②→①→②→③ | 38 | 14 | ②→②→②→① | 74 |
| 15 | ③→②→①→④ | 15 | 15 | ②→①→③→① | 39 | | TYPE NO. 1 | |
| 16 | ③→②→④→① | 16 | 16 | ②→①→③→② | 40 | No. | CASE | CODE |
| 17 | ③→④→①→② | 17 | 17 | ②→①→③→③ | 41 | 1 | ①→①→①→① | 75 |
| 18 | ③→④→②→① | 18 | 18 | ②→②→①→③ | 42 | | | |
| 19 | ④→①→②→③ | 19 | 19 | ②→②→③→① | 43 | | | |
| 20 | ④→①→③→② | 20 | 20 | ②→③→①→① | 44 | | | |
| 21 | ④→②→①→③ | 21 | 21 | ②→③→①→② | 45 | | | |
| 22 | ④→②→③→① | 22 | 22 | ②→③→①→③ | 46 | | | |
| 23 | ④→③→①→② | 23 | 23 | ②→③→②→① | 47 | | | |
| 24 | ④→③→②→① | 24 | 24 | ②→③→③→① | 48 | | | |
| | | | 25 | ③→①→①→② | 49 | | | |
| | | | 26 | ③→①→②→① | 50 | | | |
| | | | 27 | ③→①→②→② | 51 | | | |
| | | | 28 | ③→①→②→③ | 52 | | | |
| | | | 29 | ③→①→③→② | 53 | | | |
| | | | 30 | ③→②→①→① | 54 | | | |
| | | | 31 | ③→②→①→② | 55 | | | |
| | | | 32 | ③→②→①→③ | 56 | | | |
| | | | 33 | ③→②→②→① | 57 | | | |
| | | | 34 | ③→②→③→① | 58 | | | |
| | | | 35 | ③→③→①→② | 59 | | | |
| | | | 36 | ③→③→②→① | 60 | | | |

[FIG. 32]

$\theta_1=80°$  $\theta_2=120°$  $\theta_4=70°$

$\theta_3=80°$

$P_0$  $L_1$  $P_1$  $L_1$  $L_1$  $P_3$  $L_1$  $P_4$

$P_2$

[FIG. 33]

$P_1$  $\theta_2=110°$  $\theta_4=90°$

$\theta_1=70°$  $P_3$

$P_0$  $P_2$  $\theta_3=70°$  $P_4$

$W_1$  $W_1$  $W_1$  $W_1$

[FIG. 34]

2nd  3rd  1st

$P_1$

$P_0$  $L_1$  $L_1$  2nd  $L_1$  $P_4$

$P_2$  $P_3$

[FIG. 35]

3rd

$P_1$

1st  2nd

$P_0$  $P_3$  $P_4$

$P_2$  1st

$W_1$  $W_1$  $W_1$  $W_1$

[FIG. 36]

[FIG. 37]

[FIG. 38]

[FIG. 39]

[FIG. 40]

[FIG. 41]

EP 2 905 727 A1

[FIG. 42]

[FIG. 43]

[FIG. 44]

43

[FIG. 45]

[FIG. 46]

[FIG. 47]

[FIG. 48]

[FIG. 49]

[FIG. 50]

[FIG. 51]

[FIG. 52]

[FIG. 53]

[FIG. 54]

[FIG. 55]

[FIG. 56]

[FIG. 57]

[FIG. 58]

[FIG. 59]

[FIG. 60]

[FIG. 61]

[FIG. 62]

[FIG. 63]

[FIG. 64]

EP 2 905 727 A1

[FIG. 65]

[FIG. 66]

51

[FIG. 67]

[FIG. 68]

[FIG. 69]

[FIG. 72]

[FIG. 73]

[FIG. 74]

[FIG. 75]

[FIG. 76]

[FIG. 77]

(a)

(b)

[FIG. 78]

[FIG. 79]

| FIRST (=SECOND) VERTICAL REFERENCE DOT | FIRST (=SECOND) HORIZONTAL REFERENCE DOT | FIRST AND SECOND HORIZONTAL INFORMATION DOT FIRST AND SECOND VERTICAL INFORMATION DOT |
|---|---|---|
| ①(8)→②(10)→③(12) 1 WAY | ①(9)→②(10)→③(11) | ①(9)→②(10)→③(11) |
| | ①(9)→③(11)→②(10) | ①(9)→③(11)→②(10) |
| | ②(10)→①(9)→③(11) | ②(10)→①(9)→③(11) |
| | ②(10)→③(11)→①(9) | ②(10)→③(11)→①(9) |
| | ③(11)→①(8)→②(9) | ③(11)→①(8)→②(9) |
| | ③(11)→②(10)→①(9) | ③(11)→②(10)→①(9) |
| | ①(9)→①(9)→②(12) | ①(9)→①(9)→②(12) |
| | ①(9)→②(12)→①(9) | ①(9)→②(12)→①(9) |
| | ②(12)→①(9)→①(9) | ②(12)→①(9)→①(9) |
| | ①(8)→②(11)→②(11) | ①(8)→②(11)→②(11) |
| | ②(11)→①(8)→②(11) | ②(11)→①(8)→②(11) |
| | ②(11)→②(11)→①(8) | ②(11)→②(11)→①(8) |
| | ①(10)→①(10)→①(10) | ①(10)→①(10)→①(10) |
| | TOTAL 13 WAYS | TOTAL $13^4$ WAYS |
| TOTAL | TOTAL $13^5$ =371,293 WAYS | |

[FIG. 80]

[FIG. 81]

[FIG. 82]

[FIG. 83]

[FIG. 84]

[FIG. 85]

(a)

(b)

(c)

[FIG. 86]

[FIG. 87]

[FIG. 88]

[FIG. 89]

[FIG. 90]

[FIG. 91]

**INTERNATIONAL SEARCH REPORT**

International application No.

PCT/JP2013/076722

A.  CLASSIFICATION OF SUBJECT MATTER
*G06K19/06*(2006.01)i, *G06K1/12*(2006.01)i, *G06K7/10*(2006.01)i

According to International Patent Classification (IPC) or to both national classification and IPC

B.  FIELDS SEARCHED

Minimum documentation searched (classification system followed by classification symbols)
G06K19/06, G06K1/12, G06K7/10

Documentation searched other than minimum documentation to the extent that such documents are included in the fields searched
Jitsuyo Shinan Koho          1922-1996   Jitsuyo Shinan Toroku Koho    1996-2014
Kokai Jitsuyo Shinan Koho    1971-2014   Toroku Jitsuyo Shinan Koho    1994-2014

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2007-11890 A  (Kenji YOSHIDA),<br>18 January 2007 (18.01.2007),<br>paragraphs [0073] to [0078], [0088] to [0097],<br>[0147] to [0154], [0218]; fig. 1, 7, 9, 12, 19<br>to 22, 26, 28<br>& US 2010/0133351 A1    & EP 1899900 A1<br>& WO 2007/004994 A1    & KR 10-2007-0114842 A<br>& CA 2613046 A1        & CN 101213564 A<br>& AU 2006266517 A1     & RU 2008102706 A | 1-2<br>3-51 |
| Y | JP 2011-253440 A  (Tsutao NISHIZAKI),<br>15 December 2011 (15.12.2011),<br>paragraphs [0032] to [0124]; fig. 1 to 22<br>& WO 2011/152296 A1    & KR 10-2013-0114576 A<br>& CN 102985934 A | 3-7,10-15,<br>19-51 |

☒  Further documents are listed in the continuation of Box C.          ☐  See patent family annex.

* Special categories of cited documents:
"A"  document defining the general state of the art which is not considered   to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
09 January, 2014 (09.01.14)

Date of mailing of the international search report
21 January, 2014 (21.01.14)

Name and mailing address of the ISA/
Japanese Patent Office

Facsimile No.

Authorized officer

Telephone No.

Form PCT/ISA/210 (continuation of second sheet) (July 2009)

**INTERNATIONAL SEARCH REPORT**

| International application No. |
| --- |
| PCT/JP2013/076722 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2011-141705 A  (Kenji YOSHIDA),<br>21 July 2011 (21.07.2011),<br>paragraphs [0056] to [0204]; fig. 1, 14 to 22<br>& US 2012/0320425 A1     & EP 2523146 A1<br>& WO 2011/083799 A1     & CN 102770875 A | 3-7,10-15,<br>19-51 |
| Y | JP 8-241363 A  (Olympus Optical Co., Ltd.),<br>17 September 1996 (17.09.1996),<br>paragraph [0014]; fig. 15<br>(Family: none) | 8-9,16-18 |
| Y | WO 2006/040832 A1  (Kenji YOSHIDA),<br>20 April 2006 (20.04.2006),<br>paragraphs [0051], [0134] to [0300]<br>& US 2008/0088860 A1     & EP 1800883 A1<br>& KR 10-2009-0014317 A   & CA 2584397 A1<br>& CN 101044026 A         & AU 2004323944 A1 | 40-51 |

**EP 2 905 727 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3706385 B
- JP 3771252 B